(19) Europäisches Patentamt
European Patent Office
Office européen des brevets

(11) **EP 1 418 480 B1**

(12) **EUROPÄISCHE PATENTSCHRIFT**

(45) Veröffentlichungstag und Bekanntmachung des Hinweises auf die Patenterteilung:
**21.05.2008  Patentblatt 2008/21**

(51) Int Cl.:
***G05B 19/4103*** *(2006.01)*    ***B25J 9/16*** *(2006.01)*

(21) Anmeldenummer: **03025331.4**

(22) Anmeldetag: **04.11.2003**

(54) **Verfahren und Vorrichtung zum Steuern von Bewegungen eines Handhabungsgeräts mittels Interpolationen durch Splines**

Device and method for controlling the motions of a manipulator by means of splines interpolation

Dispositif et méthode de contrôle des mouvements d'un manipulateur utilisant une interpolation par splines

(84) Benannte Vertragsstaaten:
**DE FR GB IT SE**

(30) Priorität: **06.11.2002  DE 10251600**

(43) Veröffentlichungstag der Anmeldung:
**12.05.2004  Patentblatt 2004/20**

(73) Patentinhaber: **KUKA Roboter GmbH
86165 Augsburg (DE)**

(72) Erfinder:
  • **Hüttenhofer, Manfred
    86405 Meitingen (DE)**
  • **Wiedemann, Günther
    86368 Gersthofen (DE)**
  • **Burkhart, Stefan
    89407 Dillingen (DE)**

(74) Vertreter: **Lempert, Jost et al
Patentanwälte,
Dipl.-Ing. Heiner Lichti,
Dipl.-Phys. Dr. rer. nat. Jost Lempert,
Dipl.-Ing. Hartmut Lasch,
Postfach 41 07 60
76207 Karlsruhe (DE)**

(56) Entgegenhaltungen:
EP-A- 0 268 491         EP-A- 0 483 756
EP-A- 0 963 817         EP-A- 1 326 151

• **SHOEMAKE K: "Animating rotation with quaternion curves" PROCEEDINGS OF SIGGRAPH '85, SAN FRANCISCO CA, USA, 22-26 JULY 1985, Bd. 19, Nr. 3, 26. Juli 1985 (1985-07-26), Seiten 245-254, XP002291886 ISSN: 0097-8930**
• **FLEISIG R V ET AL: "A constant feed and reduced angular acceleration interpolation algorithm for multi-axis machining" Januar 2001 (2001-01), COMPUTER AIDED DESIGN, ELSEVIER PUBLISHERS BV., BARKING, GB, PAGE(S) 1-15 , XP004227221 ISSN: 0010-4485 * Seite 4, Spalte 2, Zeile 5 - Zeile 17 * * Seite 8, Spalte 1, Zeile 35 - Zeile 50 * * Zusammenfassung ***
• **HORSCH T ET AL: "Cartesian spline interpolation for industrial robots" 1. März 1998 (1998-03-01), COMPUTER AIDED DESIGN, ELSEVIER PUBLISHERS BV., BARKING, GB, PAGE(S) 217-224 , XP004117780 ISSN: 0010-4485 * Seite 217, Spalte 1 - Seite 219, Spalte 1 * * Seite 220, Spalte 1 ***
• **RÖSCHEL Ö.: 'Rational motion design - a survey' COMPUTER AIDED DESIGN 31 M{rz 1998, ELSEVIER PUBLISHERS BV, BARKING, GB, Seiten 169 - 178, XP004117775**

EP 1 418 480 B1

**Beschreibung**

Die Erfindung betrifft zumindest Verfahren zur Orientierungsführung eines Handhabungsgeräts, wie eines Industrieroboters, wobei gegebene Punktfolgen von Posen durch Splines interpoliert werden, sowie Vorrichtungen, die insbesondere zur Durchführung des erfindungsgemäßen Verfahrens geeignet sind.

Bewegungen von gesteuerten Handhabungsgeräten, beispielsweise Industrierobotern, werden in der Regel durch eine vorgegebenen Sequenz von Punkten in einem mehrdimensionalen Raum bestimmt. Im Falle eines mehrachsigen Industrieroboters beinhaltet jeder dieser Punkte die kartesischen Koordinaten von Positionen und Koordinaten bezüglich der Orientierung im dreidimensionalen euklidischen Raum sowie ggf. Koordinaten von Zusatzachsen.

Eine Roboterbewegung ist in der Regel nicht starr vorgegeben, sondern weist lediglich eine Anzahl von Fixpunkten auf, die durch die auszuführenden Arbeitsgänge bedingt sind, beispielsweise Aufnehmen und Ablegen von Werkstücken, Umfahren von Hindernissen u.s.w. Die Fixpunkte werden der zur Bewegungssteuerung eingesetzten Robotersteuerung manuell durch Anfahren und Abspeichern der entsprechenden Posen gelehrt ("geteacht") und liegen anschließend als Punktfolge vor, an der sich die zu realisierende Roboterbewegung orientieren muss, d.h. alle Fixpunkte definieren eindeutig die resultierende Bahnkurve.

Um eine "handliche" funktionale Beschreibung an Stelle einer Punktfolge zu erhalten und die Stetigkeit der Roboterbewegung in allen Bewegungskomponenten zu ermöglichen, wird die Punktfolge in der Regel interpoliert. Eine durch Interpolation gewonnene funktionale Beschreibung der Punktfolge dient mehreren Zwecken: Zum einen wird die Datenmenge komprimiert, andererseits lassen sich Informationen bezüglich Werten gewinnen, die nicht in der Punktfolge enthalten sind, beispielsweise durch Extrapolation, und schließlich resultiert eine höhere Auswertegeschwindigkeit, da die Auswertung einer Funktion oft schneller als ein Nachschlag in einer Tabelle realisiert werden kann.

In der industriellen Praxis der Bewegungssteuerung werden zur Interpolation der vorstehend beschriebenen Punktfolgen oft Spline-Funktionen verwendet, die maßgeschneiderten Anforderungen, insbesondere hinsichtlich der Glattheit der erhaltenen Kurve, der Stetigkeit und Differenzierbarkeit ihrer ersten Ableitung sowie der Stetigkeit ihrer zweiten Ableitung genügen. Da sich die ersten und zweiten Ableitungen einer Bahnkurve mit der Geschwindigkeit bzw. der Beschleunigung eines entlang der Kurve bewegten Objekts identifizieren lassen, sind diese Eigenschaften für eine effiziente Bewegungssteuerung von Industrierobotern von großer Bedeutung.

Ein vorbekanntes Verfahren zur Bewegungssteuerung von Industrierobotern unter Verwendung von Spline-Interpolationen ist in einem Artikel von Horsch und Jüttler (Computer-Aided Design, Vol. 30, Seite 217-224, 1998) beschrieben. Dabei wird die Kontur einer Roboterbewegung abschnittsweise mittels Polynomen geeigneten Grades dargestellt.

Bei den vorbekannten Verfahren zur Bewegungssteuerung von Industrierobotern durch Spline-Interpolation hat sich als nachteilig herausgestellt, dass in Abschnitten der zu interpolierenden Punktfolge, in denen Änderungen der Orientierung, der kartesischen Position und ggf. der Stellung von Zusatzachsen stark unterschiedlich ausfallen (beispielsweise minimale kartesische Änderungen bei sehr großer Orientierungsänderung), unerwünschte und unökonomische Bewegungsbahnen resultieren können. Insbesondere können in solchen Fällen Bewegungsschleifen entstehen, d.h. eine oder mehrere Komponenten der Roboterbewegung führen lokal eine ineffiziente Vor- und Zurückbewegung aus, weil die Bewegungsführung in diesem speziellen Abschnitt der Punktfolge durch große Änderungen in anderen Bewegungskomponenten dominiert wird. Des weiteren ist als nachteilig anzusehen, dass bei an sich festgelegten Bewegungsbahnen eine nachträgliche starke Änderung einzelner Bewegungskomponenten, beispielsweise das nachträgliche Programmieren einer starken Umorientierung, auf das Verhalten der anderen Bewegungskomponenten durchschlagen kann, so dass sich beispielsweise als Folge der Umorientierung auch die kartesische Kontur der Bahn ändert, was für den Anwender inakzeptabel ist.

Für die Orientierungsführung kartesischer Bewegungen, die beispielsweise in Form von Splines gegeben sind, werden häufig Quaternionen verwendet. Quaternionen sind verallgemeinerte komplexe Zahlen in Form eines Zahlenquadrupels, die sich als reellwertiger Skalar und komplexwertiger Dreiervektor darstellen lassen. Quaternionen sind eng mit der Matrixdarstellung von Drehungen verknüpft und werden deshalb bevorzugt zur Orientationsführung in Computeranimationen und zur Robotersteuerung eingesetzt. Eine Punktfolge von Roboterorientierungen wird so durch einen vierdimensionalen Spline im Quaternionenraum dargestellt.

Um in diesem Zusammenhang eine möglichst günstige, gleichmäßige Parametrisierung der Orientierungsbewegung zu erhalten, muss der Spline im Quaternionenraum möglichst auf der Oberfläche der Einheitskugel verlaufen. Nur auf diese Weise lässt sich eine gleichmäßige Parametrisierung der Projektion des Quaternionensplines auf die Einheitskugel erreichen, da bei der Umrechnung von Quaternionen in Rotationsmatrizen jedes Quaternion $q_i$ normiert werden muss. Durch die Reduzierung des an sich vierdimensionalen Quaternionensplines auf drei Freiheitsgrade im Zuge der Projektion auf die Einheitskugel (Normierung des Quaternionensplines bzw. der einzelnen Quaternionen) besteht das Risiko einer verzerrten Parametrisierung des normierten Splines, was wiederum zu einem unerwünschten Bewegungsverhalten eines so gesteuerten Roboters führen kann.

Bei vorbekannten Spline-Interpolationsverfahren erfolgt eine Parametrisierung der Bewegung bzw. der Splines über einen gemeinsamen Parameter, der oft als Bewegungsparameter t bezeichnet wird und einen Bezug zur Zeitkoordinate τ hat (vergleiche Horsch und Jüttler, Seite 221, links oben). Für eine gegebene Punktfolge $P_i$, i=1,...,n, wird die Länge der Parametrisierungsintervalle $[t_i, t_{i+1}]$ in der Regel proportional zum Abstand der zugehörigen Punkte $P_i, P_{i+1}$ angesetzt. In diesen Abstand fließt sowohl die kartesische Entfernung als auch die Änderungen der Orientierung und ggf. von Zusatzachsen ein. Es hat sich jedoch gezeigt, dass eine Parametrisierung über nur einen Parameter die vorstehend aufgeführten Nachteile bedingt.

Die Druckschrift Röschel, O., "Rational motion design - a survey", COMPUTER AIDED DESIGN, ELSEVIER PUBLISHERS BV, BARKING, GB, März 1998, Seiten 169-178 behandelt ein Verfahren zur Orientierungsführung u.a. eines Roboters, wobei Punktfolgen von Posen durch Splines interpoliert werden und die Orientierung durch Quaternionen auf der vierdimensionalen Einheitskugel mittels herkömmlicher Kugelkoordinaten dargestellt wird. Nachteilig ist dabei, dass es, wie im Bescheid dargestellt, unterschiedliche Definitionen für die Kugelkoordinaten gibt, wie z.B.

$$v(\alpha, \beta) = (\cos(\alpha) * \cos(\beta), \sin(\alpha) * \cos(\beta), \sin(\beta))$$

oder aber alternativ

$$v*(\alpha, \beta) = (\cos(\alpha) * \sin(\beta'), \sin(\alpha) * \sin(\beta'), \cos(\beta'))$$

mit $\beta' = \pi/2 - \beta$

Dabei werden die Winkel $\beta$ bzw. $\beta'$ unterschiedlich interpretiert.

Der Erfindung liegt die Aufgabe zugrunde, ein Verfahren und eine Vorrichtung der eingangs genannten Art dahingehend weiterzuentwickeln, dass keine unerwünschten, weil unökonomischen Bahnbewegungen, wie Schleifen oder dergleichen, auftreten. Weiterhin soll die Bewegungssteuerung so erfolgen, dass eine Umorientierung von Punkt zu Punkt minimal ist. Ferner soll erreicht werden, dass unter Vermeidung der genannten Nachteile immer die gleiche Definition für die Polarkoordinaten gegeben ist.

Die vorstehend genannte Aufgabe wird erfindungsgemäß zunächst durch Verfahren der eingangs genannten Art mit den Merkmalen des Anspruchs 1 gelöst.

Bei einer Vorrichtung der eingangs genannten Art sind zur Lösung der vorstehend genannten Aufgabe zunächst die Merkmale des Anspruchs 9 vorgesehen.

Durch die getrennte Parametrisierung aller Komponenten der $P_i$, die sich gegenseitig nicht beeinflussen dürfen, beispielsweise der kartesischen Position und der Orientierung, werden die oben genannten Nachteile vermieden.

Nach einer Weiterentwicklung der Erfindung ist insbesondere vorgesehen, dass kartesische Positionen des Handhabungsgerätes getrennt von den zugehörigen Orientierungen parametrisiert werden bzw. parametrisierbar sind.

Weist das zu steuernde Handhabungsgerät Zusatzachsen auf, sieht eine Weiterbildung der Erfindung vor, dass Bewegungen von Zusatzachsen getrennt von den Positionen und/oder den Orientierungen des Handhabungsgerätes parametrisiert werden bzw. parametrisierbar sind.

Zur Lösung der Aufgabe schlägt die Erfindung daher alternativ zur oben genannten Lösung ein Verfahren zur Orientierungsführung eines Handhabungsgeräts, wie eines Industrieroboters nach dem Anspruch 4 vor, nach dem gegebene Punktfolgen von Posen durch Splines interpoliert werden und die Orientierung durch in die gesamte Menge der reellen Zahlen $R^3$ erweiterter Eulerwinkel $A_i$, $B_i$, $C_i \in R$, für i=1,...,n dargestellt wird, sowie eine Vorrichtung mit einer Interpolationseinrichtung, die zur Durchführung des Verfahrens ausgebildet ist.

Auf diese Weise wird erfindungsgemäß immer eine gleichmäßige Parametrisierung der Orientierung gewährleistet, für deren Darstellung zudem nur drei Freiheitsgrade notwendig sind. In diesem Zusammenhang werden die herkömmlichen Eulerwinkel erfindungsgemäß auf den gesamten $R^3$ erweitert, wodurch minimale Umorientierungen gewährleistet sind. Es hat sich überraschenderweise gezeigt, dass sich durch Aufheben der Beschränkung des Definitionsbereichs der Eulerwinkel wesentlich ökonomischere Bewegungsbahnen bestimmen lassen.

Weitere Vorteile und Eigenschaften der Erfindung ergeben sich aus den Patentansprüchen sowie der nachfolgenden Beschreibung konkreter Ausführungs- und Anwendungsbeispiele anhand der Zeichnungen. Es zeigt:

Fig. 1a    eine Bahnkurve einer Roboterbewegung in zwei Dimensionen nach dem Stand der Technik mit unerwünschter Schleifenbildung;

Fig. 1b    eine erfindungsgemäße Bahnkurve einer Roboterbewegung in zwei Dimensionen ohne Schleifenbildung;

Fig. 2a    eine Rotation in der Beschreibung mit Eulerwinkeln;

Fig. 2b    die Rotation gemäß der Fig. 2a in einer unterschiedlichen Beschreibung mit Eulerwinkeln;

Fig. 3    eine Rotationsbewegung in der Darstellung mit gewöhnlichen Eulerwinkeln;

Fig. 4    eine Darstellung der Rotation aus Fig. 3 mit erweiterten Eulerwinkeln;

Fig. 5    ein Ablaufdiagramm eines erfindungsgemäßen Verfahrens bei Verwendung des Quaternionenalgorithmus;

Fig. 6    ein Ablaufdiagramm eines erfindungsgemäßen Verfahrens bei Verwendung des Eulerwinkelalgorithmus; und

Fig. 7    ein Blockschaltbild einer erfindungsgemäßen Vorrichtung.

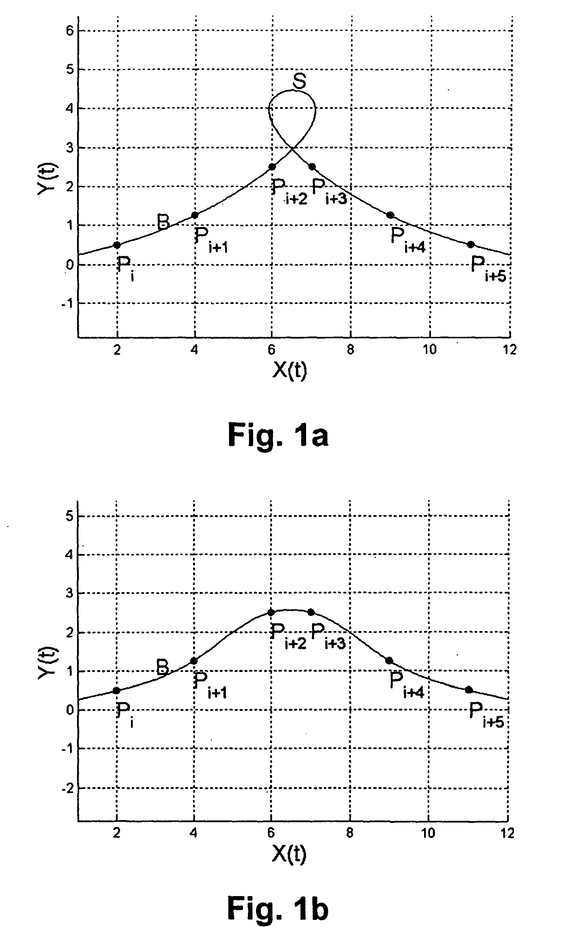

Die Fig. 1a zeigt in einer vereinfachten zweidimensionalen Darstellung eine kartesische Bewegungskontur B für die Bewegung eines Industrieroboters. Dargestellt sind zwei kartesische Koordinaten x(t), y(t), die von einem gemeinsamen Parameter t abhängen, der in der Regel in Beziehung zu einer Zeitkoordinate steht. Die Bahnkontur B weist bei S eine Schleife auf, d.h. über dem zugehörigen Intervall des Parameters t führt der Roboter in x- und/oder y-Richtung eine in der Regel unerwünschte, weil unökonomische Vor- und Zurückbewegung aus, die in der Praxis vermieden werden soll. Die Kurve B interpoliert eine vorgegebene Sequenz von Punkten $P_i$, die den Verlauf der Roboterbewegung in einem mehrdimensionalen Raum vorgeben. Die Punkte $P_i$ können der für die Bewegungssteuerung verantwortlichen Robotersteuerung "gelehrt" ("geteacht") werden oder ergeben sich während eines Handhabungsvorgangs (online), beispielsweise aus Sensorinformationen oder dergleichen.

Zur Interpolation der $P_i$ bei Roboterbewegungen werden standardmäßig Splines verwendet (Horsch und Jüttler, a.a.O.).

Seien im folgenden

$$P_i = (X_i, Y_i, Z_i, A_i, B_i, C_i, E1, \ldots, Em) \in R^{6+m}, i = 1, \ldots, n$$

die zu interpolierenden Roboterpositionen (für einen 6-Achs-Roboter mit m Zusatzachsen E1 bis Em). Gesucht ist somit eine Parametrisierung eines Splines Sp der gewünschten Kontur, d.h.

$$Sp(t_i) = P_i \text{ für alle } i = 1, \ldots, n \text{ und } t_1 < t_2 < t_3 < \ldots < t_n ,$$

welche zu einer möglichst glatten Kurve führt. Um eine günstige Kontur zu erhalten, wird die Länge der Parametrisierungsintervalle $[t_i, t_{i+1}]$ in der Regel proportional zum Abstand der zugehörigen Punkte $P_i, P_{i+1}$ gewählt. In diesen Abstand müssen sowohl die kartesische Entfernung als auch die Orientierungsänderung und ggf. Zuatzachsänderungen einfließen. Durch dieses Vorgehen sollen unerwünschte Schleifen vermieden werden.

Als Spline bezeichnet man allgemein eine stückweise Polynom-Interpolation mit wählbaren Eigenschaften der Polynome an den Fügestellen (z.B. Stetigkeit und Differenzierbarkeit der ersten Ableitung und/oder stetige zweite Ableitung bei kubischer Spline-Interpolation mit Funktionen dritten Grades).

Eine Parametrisierung mit nur einem Parameter t kann - wie in Fig. 1a gezeigt - in Abschnitten $[P_i, P_{i+1}]$, in denen die Änderungen der Orientierung, der kartesischen Position und eventuell der Zusatzachsen stark unterschiedlich ausfallen (beispielsweise minimale kartesischen Änderungen bei gleichzeitiger großer Orientierungsänderung), zu einem Parameterintervall $[t_i, t_{i+1}]$ führen, dessen Länge nicht gleichzeitig für die Orientierungsführung und kartesische Position günstig ist. In solchen Fällen können nach wie vor Schleifen entstehen (Fig. 1a).

Auch nachträglich programmierte starke Umorientierungen können das gemeinsame Parameterintervall $[t_i, t_{i+1}]$ verändern, beispielsweise verlängern, wodurch sich die kartesische Kontur ändert, was in der Praxis nicht akzeptabel ist.

Bei der Interpolation einer gegebenen Folge von Punkten $P_i$ durch eine einzige, zusammenhängende Kurve sollen neben den "geteachten" kartesischen Positionen (X, Y, Z) auch die Orientierungen (z.B. dargestellt über Eulerwinkel (A, B, C) und entsprechende Zusatzachspositionen (E1, E2, ...)) interpoliert werden, wobei gleichzeitig die Umorientierung von Punkt zu Punkt minimiert werden soll. Außerdem soll eine reine Änderung der Orientierung die kartesische Kurve bzw. Zusatzachskontur nicht verändern und umgekehrt. Im Rahmen der Erfindung wird daher vorgeschla-

gen, alle Komponenten der $P_i$, die sich gegenseitig nicht beeinflussen dürfen, getrennt zu parametrisieren. Beispielsweise können die kartesische Position, die Orientierung (unabhängig von einer Beschreibung mit Eulerwinkeln oder Quaternionen) und die verschiedenen Zusatzachsen jeweils getrennt voneinander parametrisiert werden, z.B.:

$$\mathtt{Kar(t_i) := (X_i, Y_i, Z_i), i = 1,...n;\ t_i \in R,\ t_1 < t_2 < ... < t_n}$$

$$\mathtt{Orio(o_i) := (\dot{A}_i, B_i, C_i), i = 1,...n;\ o_i \in R,\ o_1 < o_2 < ... < o_n}$$

$$\mathtt{Ek(e_i) := Ek_i,\ i = 1,...,n,\ k = 1,...,m;\ ek_i \in R,}$$

$$\mathtt{ek_1 < ek_2 < ... < ek_n.}$$

Durch eine monoton wachsende Zwischenparametrisierung

$$\mathtt{o(t)\ mit\ o(t_i)=o_i\ für\ alle\ i=1,...,n}$$

$$\mathtt{ek(t)\ mit\ ek(t_i)=ek_i\ für\ alle\ i=1,...,n,k=1,...,m}$$

wird die gewünschte Interpolationseigenschaft garantiert und es ergibt sich eine in der Fig. 1b gezeigte Kontur, welche die gewünschten Anforderungen erfüllt:

$$\mathtt{Sp(t)=(Kar(t),\ Orio(o(t)),\ E1(e1(t)),}$$
$$\mathtt{...,Em(em(t))).}$$

Um die Monotonie der Zwischenparametrisierung bei vorgegebener Ordnung der Differenzierbarkeit zu erhalten, lässt sich beispielsweise auf interpolierende Splines zurückgreifen, die einen zusätzlichen Parameter enthalten, über den man den Spline beliebig nahe an den zugehörigen Polygonzug zwingen kann (vergleiche z.B. Helmuth Späth, Spline-Algorithmen, 4. Auflage, R. Oldenbourg Verlag 1986, Verallgemeinerte kubische Spline-Funktionen).
Eine reine Orientierungsänderung in einem Punkt verändert somit nur noch die Parametrisierung bzw. Zwischenparametrisierung der Orientierung, nicht aber die der kartesischen Bahn oder der Zusatzachsen.
Die Orientierungsführung kann mit Quaternionen oder Eulerwinkeln erfolgen.

1. Orientierungsführung mit Quaternionen

Jede Umorientierung im Raum kann durch eine Drehung um einen geeigneten Vektor $v \in R^3$ (mit $|v| = 1$) mit Winkel $\varphi$ dargestellt werden. Zwischen diesem Paar (Vektor, Winkel) und dem zugehörigen Quaternion $q$ gibt es folgenden Zusammenhang:

$$\mathtt{q = (w, x, y, z)}$$
$$\mathtt{= (cos(1/2\varphi), sin(1/2\varphi) \cdot v)}$$
$$\mathtt{= (cos(-1/2\varphi), sin(-1/2\varphi) \cdot (-v))}$$

Eine Drehung um -v mit -$\varphi$ führt daher nicht nur zur selben Orientierung sondern auch zum selben Quaternion.
Hingegen führt eine Drehung um v in der Gegenrichtung, also mit -($2\pi$-$\varphi$), natürlich ebenfalls zur selben Orientierung, man erhält jedoch -q als zugehöriges Quaternion (im vorzeichen steckt die Information über die Drehrichtung).

Zwischen dem Paar (Drehvektor, Winkel) und den zugehörigen Quaternionen gibt es demnach die Zuordnung:

$$q \Leftrightarrow (v,\varphi),(-v,-\varphi)$$
$$-q \Leftrightarrow (v,-(2\pi - \varphi)),(-v,2\pi - \varphi).$$

Für die Einheitsquaternionen q= ($\pm$1,0, 0,0) ist $\varphi$=0 bzw. $2\pi$, und wegen sin(1/2$\varphi$)=0 ist der Vektor v beliebig wählbar. Für alle übrigen Quaternionen auf dem Einheitskreis lassen sich stets zwei Paare (v, $\varphi$), (-v, -$\varphi$) mit $\varphi$ # 0 bzw. $\varphi \neq 2\pi$ bestimmen.

Bei der Umrechnung in eine Orientierungsmatrix wird das Quaternion normiert, d.h. alle von Null verschiedenen positiven Vielfachen eines Quaternions führen zur gleichen Orientierungsmatrix (und Drehrichtung).

Um eine absolut gleichmäßig parametrisierte Orientierungsführung mittels eines Quaternionensplines aufzufinden, der immer auf der Oberfläche der Einheitskugel im Quaternionenraum verläuft, und wobei die Dimension des Orientierungssplines um eine Dimension (von vier auf drei) reduziert wird, schlägt die Erfindung vor, dass zur Bestimmung des Splines nacheinander die folgenden Schritte ausgeführt werden (im Folgenden ist N die Menge der natürlichen und Z die Menge der ganzen Zahlen):

- Darstellung jedes Quaternions auf der vierdimensionalen Einheitskugel gemäß

$$q(\alpha, \beta, \varphi) = (\cos(\tfrac{1}{2}\varphi), \sin(\tfrac{1}{2}\varphi) \cdot v(\alpha, \beta))$$

mit

$$v(\alpha, \beta) = (\cos(\alpha)\cos(\beta), \sin(\alpha)\cos(\beta), \sin(\beta)),$$

wobei $\alpha$, $\beta$, (und r=1) die Kugelkoordinaten der Drehvektoren v = v($\alpha$, $\beta$) angeben;

- Ermittlung von bewegungsoptimalen Paaren (v$_i$, $\varphi_i$) durch

    a) Anpassen von Vorzeichen der q$_i$, so dass

$$q_i^T q_{i+1} \geq 0 \text{ für alle } i = 1,\ldots,n-1;$$

    b) für alle i = 1,...,n Bestimmung eines möglichen Paares (v$_i$, $\phi_i$) mit

$$q_i = (\cos(\tfrac{1}{2}\varphi_i), \sin(\tfrac{1}{2}\varphi_i)\, v_i);$$

    c) Auswahl eines beliebigen Startpaares (v$_{iStart}$, $\varphi_{iStart}$), mit iStart $\in$ I := {i = 1, ... ,n | q$_i$ $\neq$ ($\pm$1, 0, 0, 0)}, z.B. iStart = min{i $\in$ I}; wählte man iStart $\notin$ I, so gäbe man sich den völlig frei wählbaren Drehvektor v$_{iStart}$ unnötigerweise fest vor, was zu einer suboptimalen Orientierung führen kann, weil das Startpaar selbst nicht mehr angepasst würde;

    d) für alle j $\in$ {1,...,n} mit Ausnahme von j = iStart Bestimmung jeweils genau eines Paares (v$_j$, $\varphi_j$) ausgehend von einem Referenzpaar (v$_i$, $\varphi_i$) gemäß der Schritte e) bis g) wobei i $\in$ {1,...,n} ein benachbarter Index, d.h. i=j+1 oder i=j-1 ist und ferner entweder i = iStart gilt oder das Referenzpaar bereits gemäß der Schritte e) bis g) angepasst wurde;

    e) Bestimmung von k*, h* $\in$ Z, so dass

$$\left|\varphi_{j,1}(k^{\bullet}) - \varphi_i\right| = \min\{\left|\varphi_{j,1}(k) - \varphi_i\right|, \ k \in Z\}$$

$$= \min\{\left|\varphi_j + 4k\pi - \varphi_i\right|, \ k \in Z\},$$

$$\left|\varphi_{j,2}(h^*) - \varphi_i\right| = \min\{\left|\varphi_{j,2}(h) - \varphi_i\right|, \ h \in Z\}$$

$$= \min\{\left|-\varphi_j + 4h\pi - \varphi_i\right|, \ h \in Z\};$$

f) anschließend für $j \in I$ Bestimmung von

$$d_{j,1} = \left|\arccos(v_i^T v_j)\right| + \left|\varphi_{j,1}(k^{\bullet}) - \varphi_i\right|,$$

$$d_{j,2} = \left|\arccos(v_i^T(-v_j))\right| + \left|\varphi_{j,2}(h^{\bullet}) - \varphi_i\right|$$

bzw. für $j \notin I$

$$d_{j,1} = \left|\varphi_{j,1}(k^{\bullet}) - \varphi_i\right|,$$

$$d_{j,2} = \left|\varphi_{j,2}(h^{\bullet}) - \varphi_i\right|;$$

g) anschließend jeweils Auswahl von $(v_j, \varphi_j)$, wobei für $j \in I$

$$(v_j, \varphi_j) = \begin{cases} (v_j, \varphi_{j,1}(k^*)), & d_{j,1} \leq d_{j,2} \\ (-v_j, \varphi_{j,2}(h^*)), & d_{j,1} > d_{j,2} \end{cases}$$

bzw. für $j \notin I$

$$(v_j, \varphi_j) = \begin{cases} (v_i, \varphi_{j,1}(k^*)) & \text{falls } d_{j,1} \leq d_{j,2} \\ (v_i, \varphi_{j,2}(h^*)) & \text{falls } d_{j,1} > d_{j,2}; \end{cases}$$

dabei ist $v_j$ für $j \notin I$ prinzipiell beliebig wählbar. Die spezielle Wahl ($v_j = v_i$) ist nur eine vorläufige (bis alle ($v_j, \varphi_j$) angepasst sind) und garantiert, dass in Schritt d) immer ein vollständiges Referenzpaar existiert sowie dass frei wählbare Drehvektoren ignoriert (d.h. übersprungen) werden, wodurch letztlich stets ein Abstand benachbarter, nicht frei wählbarer Drehvektoren minimiert wird.
Sind alle Paare ($v_i, \varphi_i$) gemäß der Schritte e) bis g) angepasst, so werden die frei wählbaren $v_i$ (mit $i \notin I$) nicht mehr benötigt und können gelöscht werden;

- Ermittlung von Paaren ($\alpha_i, \beta_i$) aus den $v_i$ in Kugelkoordinatendarstellung durch:

h) Bestimmung gewöhnlicher Kugelkoordinaten ($\alpha_i, \beta_i$) der $v_i$ für alle $i \in I$:

$$v_i = (\cos(\alpha_i)\,\cos(\beta_i),\ \sin(\alpha_i)\,\cos(\beta_i),\ \sin(\beta_i'));$$

i) Definition von

$$J := \{j \in I \text{ mit } v_j \neq (0,\ 0,\ \pm 1)\},$$

$$L := \{j \in I \text{ mit } v_j = (0,\ 0,\ \pm 1)\}$$

und damit Definition erweiterter Kugelkoordinaten aus R x R

-   für i ∈ J:

$$(\alpha_{i,1}(h),\ \beta_{i,1}(k)) = (\alpha_i + 2h\pi,\ \beta_i + 2k\pi),$$

$$h,\ k \in Z;$$

$$(\alpha_{i,2}(l),\ \beta_{i,2}(m)) = (\alpha_i + \pi + 2l\pi,\ \pi - \beta_i + 2m\pi),$$

$$l,\ m \in Z;$$

-   für i ∈ L:

$$(\alpha_i(x),\ \beta_i(k)) = (x,\ \beta_i + 2k\pi),$$

$$x \in R,\ k \in Z$$

(wegen $\beta_i = \pm\pi/2$ für i ∈ L, liefert $(\alpha_i(x) + \pi, \pi - \beta_i(k))$ keine weiteren Lösungen);

j) Festlegen eines beliebigen Startpaares $(\alpha_{jStart}, \beta_{jStart})$ mit jStart ∈ J, z.B. jStart = min {j ∈ J} (jStart ∈ L wäre ungünstig, weil der (eigentlich frei wählbare) Parameter $\alpha_j$ dann fest vorzugeben wäre, was zu einer suboptimalen Lösung führen würde);

k) für alle j ∈ I mit Ausnahme von j = jStart jeweils Bestimmung erweiterter Polarkoordinaten gemäß der Schritte 1) und m), wobei i ∈ I ein benachbarter Index von j ist, so dass kein k ∈ I zwischen i und j liegt und außerdem entweder i = jStart ist oder das Referenzpaar $(\alpha_i, \beta_i)$ bereits gemäß der Schritte l) und m) angepasst wurde;

1) Bestimmung für j ∈ J von Werten h*, k*, l*, m* ∈ Z mit

$$d_{j,1} = \min\{|\alpha_{j,1}(h) - \alpha_i| + |\beta_{j,1}(k) - \beta_i|,$$

$$\text{mit } h,\ k \in Z\}$$

$$= |\alpha_{j,1}(h^*) - \alpha_i| + |\beta_{j,1}(k^*) - \beta_i|;$$

$$d_{j,2} = \min\{|\alpha_{j,2}(1) - \alpha_i| + |\beta_{j,2}(m) - \beta_i|,$$
$$\text{mit } 1, m \in Z\}$$
$$= |\alpha_{j,2}(1^*) - \alpha_i| + |\beta_{j,2}(m^*) - \beta_i|$$

bzw. für $j \in L$ eines Wertes $k^* \in Z$ mit

$$|\beta_j(k^*) - \beta_i| = \min\{|\beta_j(k) - \beta_i|, k \in Z\};$$

m) anschließend Auswahl von $(\alpha_j, \beta_j)$, wobei für $j \in J$

$$(\alpha_j, \beta_j) = \begin{cases} (\alpha_{j,1}(h^*), \beta_{j,1}(k^*)) & d_{j,1} \leq d_{j,2} \\ (\alpha_{j,2}(1^*), \beta_{j,2}(m^*)) & d_{j,1} > d_{j,2} \end{cases}$$

bzw. für $j \in L$

$$(\alpha_j, \beta_j) = (\alpha_i, \beta_j(k^*));$$

für $j \in L$ ist $\alpha_j$ prinzipiell beliebig wählbar. Die spezielle Wahl ($\alpha_j = \alpha_i$) ist nur vorläufig (bis alle $(\alpha_j, \beta_j)$ angepasst sind) und garantiert, dass in Schritt 1) immer ein vollständiges Referenzpaar existiert sowie dass frei wählbare $\alpha$-Winkel ignoriert (d.h. übersprungen) werden, wodurch der Abstand von einem $\alpha$-Winkel zum nächsten (benachbarten), nicht frei wählbaren $\alpha$-Winkel minimiert wird.

Sind alle Paare $(\alpha_j, \beta_j)$ gemäß der Schritte l) und m) angepasst, so werden die frei wählbaren $\alpha_j$ (mit $j \in L$) nicht mehr benötigt und können gelöscht werden;

n) Auswahl einer Anzahl von gemäß der Schritte a) bis m) bestimmter Tripel

$$(\alpha_i, \beta_i, \varphi_i) = \begin{cases} (\alpha_i, \beta_i, \varphi_i) & \text{für } i \in J \\ (*, \beta_i, \varphi_i) & \text{für } i \in L \\ (*, *, \varphi_i) & \text{für } i \notin I, \end{cases}$$

wobei mit "*" bezeichneten Komponenten beliebig wählbar sind;

o) Anpassen der wählbaren Komponenten in den Tripeln $(\alpha_i, \beta_i, \varphi_i)$ ;

- Interpolation der in Schritt n) ausgewählten Tripel $(\alpha_i, \beta_i, \varphi_i)$ durch einen Spline; und

- Einsetzen der Interpolationsfunktion in $q(\alpha, \beta, \varphi)$.

Auf diese Weise ermittelte interpolierte Bahnkurven für Roboterbewegungen vermeiden insbesondere die in Fig. 1a dargestellte unerwünschte Schleifenbildung, auch bei nachträglicher Veränderung einzelner Bewegungskomponenten, wie der Orientierung im Raum, da derartige Komponenten der Bewegung erfindungsgemäß immer auch eine eigene Parametrisierung besitzen, die sich ohne Auswirkungen auf die anderen Bewegungskomponenten anpassen lässt.

Die Anpassung der frei wählbaren Komponenten der $(\alpha_i, \beta_i, \phi_i)$ erfolgt nach einer Weiterbildung des vorstehenden Algorithmus unter Verwendung von:

$$\text{iMin:= min } \{i \in I\}$$

$$\text{iMax:= max } \{i \in I\}$$

$$\text{iMin:= min } \{j \in J\}$$

$$\text{jMax:= max } \{j \in J\},$$

so dass

$$\alpha_p = \begin{cases} \alpha_{jMin} & \text{für } 1 \leq p < jMin, \\ \alpha_{jMax} & \text{für } jMax < p \leq n \end{cases}$$

und

$$\beta_p = \begin{cases} \beta_{iMin} & \text{für } 1 \leq p < iMin, \\ \beta_{iMax} & \text{für } iMax < p \leq n. \end{cases}$$

Weiterhin kann vorgesehen sein, dass für benachbarte i, j ∈ J für alle i < p < j, d.h. p ∉ J

$$\alpha_p = \alpha_i + (p - i)/(j - i) \cdot (\alpha_j - \alpha_i)$$

und entsprechend für benachbarte i, j ∈ I für alle i < p < j, d.h. p ∉ I

$$\beta_p = \beta_i + (p - i)/(j - i) \cdot (\beta_j - \beta_i)$$

gewählt wird.

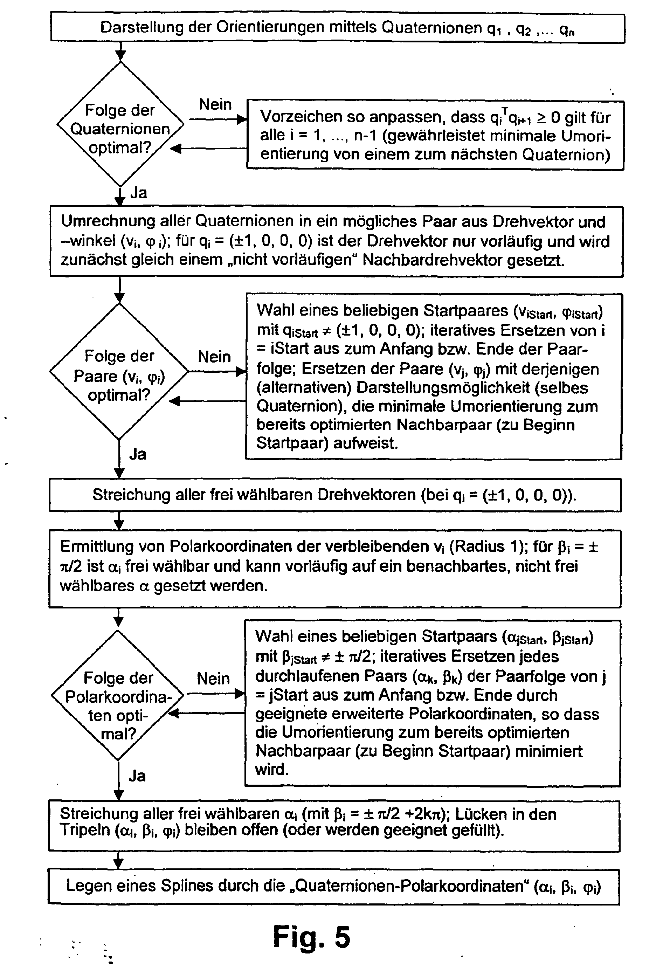

Die erfindungsgemäße Bewegungssteuerung mittels Quaternionen ist in der nachfolgenden Tabelle 1 und in Fig. 5 anhand eines Ablaufdiagramms nochmals kompakt dargestellt.

Tabelle 1: Quaternionen-Algorithmus

| Aktion | Orientierung mit Drehvektoren und -winkeln berechnen | | | | | |
|---|---|---|---|---|---|---|
| Quaternionen berechnen, vorzeichen anpassen | $q_1$ | $q_2 = (1,0,0,0)$ | $q_3$ | ... | $q_{n-1}$ | $q_n = (-1,0,0,0)$ |
| Drehvektoren/-winkel berechen | $(\overline{v}_1, \overline{\varphi}_1)$ | $(\overline{v}_2, \overline{\varphi}_2)$ mit $\overline{v}_2 = \overline{v}_1$ | $(\overline{v}_3, \overline{\varphi}_3)$ | ... | $(\overline{v}_{n-1}, \overline{\varphi}_{n-1})$ | $(\overline{v}_n, \overline{\varphi}_n)$ mit $\overline{v}_n = \overline{v}_{n-1}$ |

(fortgesetzt)

| Aktion | Orientierung mit Drehvektoren und -winkeln berechnen | | | | | |
|---|---|---|---|---|---|---|
| Änderungen von Paar zu Paar minimieren | $(v_1, \varphi_1)$ | $(v_2, \varphi_2)$ | $(v_3, \varphi_3)$ | ... | $(v_{n-1}, \varphi_{n-1})$ | $(v_n, \varphi_n)$ |
| frei wählbare $v_i$ löschen | $(v_1, \varphi_1)$ | $(*, \varphi_2)$ | $(v_3, \varphi_3)$ | ... | $(v_{n-1}, \varphi_{n-1})$ | $(*, \varphi_n)$ |

| Aktion | erweiterten Polarkoordinaten für Drehvektoren berechnen | | | | | |
|---|---|---|---|---|---|---|
| Drehvektoren betrachten | $v_1 = (0, 0, -1)$ | $*$ | $v_3$ | ... | $v_{n-1}$ | $* = (0, 0, 1)$ |
| Polarkoordinaten berechnen | $(\overline{\alpha}_1, \overline{\beta}_1,)$ mit $\overline{\alpha}_1 = \overline{\alpha}$ | $(*, *)_3$ | $(\overline{\alpha}_3, \overline{\beta}_3)$ | ... | $(\overline{\alpha}_{n-1}, \overline{\beta}_{n-1})$ mit $\overline{\alpha}_{n-1} = \overline{\alpha}_{n-2})$ | $(*, *)$ |
| erweiterte Polarkoordinaten berechnen | $(\alpha_1, \beta_1)$ | $(*, *)$ | $(\alpha_3, \beta_3)$ | ... | $(\alpha_{n-1}, \beta_{n-1})$ | $(*, *)$ |
| frei wählbare $\alpha_i$ löschen | $(*, \beta_1)$ | $(*, *)$ | $(\alpha_3, \beta_3)$ | ... | $(*, \beta_{n-1})$ | $(*, *)$ |

| Aktion | Orientierung mit "Quaternionen - Polarkoordinaten" darstellen | | | | | |
|---|---|---|---|---|---|---|
| berechne dreidimensionalen Spline durch | $(*, \beta_1, \varphi_1)$ | $(*, *, \varphi_2)$ | $(\alpha_3, \beta_3, \varphi_3)$ | ... | $(*, \beta_{n-1}, \varphi_{n-1})$ | $(*, *, \varphi_n)$ |

2. Orientierungsführung mit Eulerwinkeln

Während die "klassischen" Eulerwinkel per definitionem auf einen Teil des $R^3$ mit $[-\pi, \pi] \times [-\pi/2, \pi/2] \times [-\pi, \pi]$ beschränkt sind, werden erfindungsgemäß alle Restriktionen für die Eulerwinkel fallengelassen. Gesucht sind unter allen möglichen Varianten der Orientierungsdarstellung mit "erweiterten Eulerwinkeln" aus $R \times R \times R$ ($R^3$) diejenigen, welche zu den geringsten Umorientierungen führen.
Führt man nacheinander drei Drehungen um Winkel A, B und C aus, wobei immer um eine Achse im jeweils mitgedrehten System gedreht wird, so werden diese Winkel als Eulerwinkel bezeichnet. Abhängig von der Reihenfolge der Achsen, um die gedreht wird, gibt es für jede Orientierung zwölf verschiedene Arten von Eulerwinkeln, z.B. X-Y-Z-Eulerwinkel, X-Y-X-Eulerwinkel u.s.w.
Sind A, B, C beispielsweise Z-Y-X-Eulerwinkel, so ergibt sich die Gesamtdrehung R aus

$$\texttt{R=rot(z,A)} \cdot \texttt{Rot(y,B)} \cdot \texttt{Rot(x,C),}$$

wobei Rot(v,ω) eine Drehung um v mit Winkel ω bezeichnet.
Die folgenden Überlegungen sind auf alle Arten von Eulerwinkeln übertragbar. Es ist daher möglich, sich ohne Einschränkung auf Z-Y-X-Eulerwinkel zu beschränken. In diesem Fall ergibt sich die Zielorientierung aus der Startorientierung (Bezugssystem I), indem man

- im Bezugssystem I um die z-Achse mit A dreht (Ergebnis: Bezugssystem I');
- im eingestrichenen Bezugssystem I' um die y'-Achse mit B dreht (Ergebnis Bezugssystem I'');
- im zweigestrichenen Bezugssystem I'' um die x''-Achse mit C dreht (Ergebnis: Zielorientierung R).

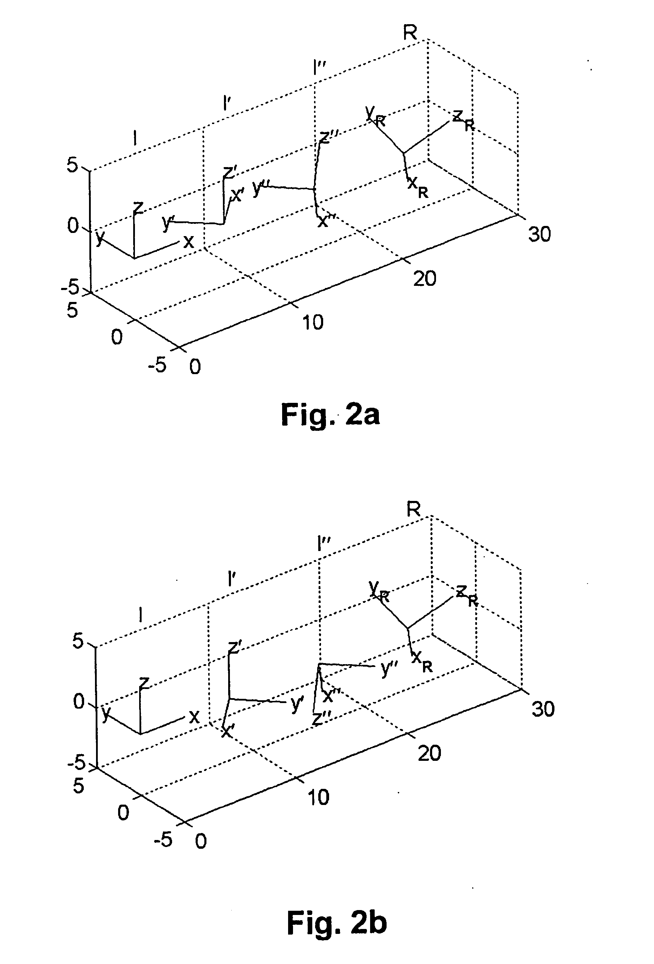

Dies ist exemplarisch in Fig. 2a für Z-Y-X-Eulerwinkel dargestellt: Zunächst wird das Bezugssystem I durch eine Drehung mit A=π/4 um die z-Achse (positive Drehrichtung gegen den Uhrzeigersinn) in das Bezugssystem I' überführt. Das Bezugssystem I' wird anschließend durch Drehung um die neu definierte y'-Achse mit B=π/3 in ein neues Bezugssystem I'' überführt. Diese geht abschließend durch Drehung um die Achse x'' mit C=π/4 in die gewünschte Zielorientierung über.

Bei Betrachtung nur der x''-Achse im Bezugssystem I'' (bzw. bei der Zielorientierung), stellen die Winkel A und B offensichtlich deren Kugelkoordinaten bezüglich der Startorientierung dar. Man erhält demnach dasselbe x'' mit dem Winkelpaar (A+π,π-B).

In diesem Fall sind dann allerdings y'' und z'' gegenüber dem Ansatz mit (A, B, C) um einen Winkel π verdreht. Es ergibt sich daher dieselbe Zielorientierung bei Verwendung der Eulerwinkel (A+π, π-B, C+π); im vorherigen Beispiel also anstelle von (π/4, π/3, π/4) das Tripel (5/4π, 2/3π, 5/4π). Dies ist in Fig. 2b dargestellt.

Erfindungsgemäß wird eine derartige Anpassung der Eulerwinkel dadurch erreicht, dass zur minimalen Umorientierung nacheinander die folgenden Schritte ausgeführt werden, wobei die Eulerwinkel A,B,C ohne Beschränkung der Allgemeinheit Drehungen um die momentane z-Achse, y-Achse bzw. x-Achse angeben:

- Darstellung der Orientierungen $(A_i, B_i, C_i)$ durch:

   a) Bestimmung gewöhnlicher Eulerwinkel $(A_i, B_i, C_i)$;

   b) für $I := \{i=1, ..., n \mid B_i \neq \pm\pi/2 + 2k\pi, k \in Z\}$ und $i \in I$ Definition von

$$(A_{i,1}(g), B_{i,1}(h), C_{i,1}(k))$$
$$= (A_i + 2g\pi, B_i + 2h\pi, C_i + 2k\pi),$$
$$g, h, k \in Z; \text{ und}$$

$$(A_{i,2}(l), B_{i,2}(m), C_{i,2}(o))$$
$$= (A_i + \pi + 2l\pi, \pi - B_i + 2m\pi, C_i + \pi + 2o\pi),$$
$$l, m, o \in Z;$$

   c) für $J := \{i=1, ... , n \mid B_i = \pi/2 + 2k\pi, k \in Z\}$ und $i \in J$ Definition von

$$(A_i(t), B_i(h), C_i(k, t))$$
$$= (A_i + t, B_i + 2h\pi, C_i + t + 2k\pi),$$
$$t \in R, h, k \in Z$$

   (für $i \in J$ liefert die alternative Darstellung $(A_i(t) + \pi, \pi - B_i(h), C_i(k, t) + \pi)$ keine neuen Lösungen);

   d) für $L := \{i=1, ..., n \mid B_i = -\pi/2 + 2k\pi, k \in Z\}$ und $i \in L$ Definition von

$$(A_i(t), B_i(h), C_i(k, t))$$
$$= (A_i + t, B_i + 2h\pi, C_i - t + 2k\pi),$$
$$t \in R, h, k \in Z$$

   (auch für $i \in L$ liefert $(A_i(t) + \pi, \pi - B_i(h), C_i(k, t) + \pi)$ keine neuen Lösungen);

   e) Auswahl eines beliebigen Startpaares $(A_{iStart}, B_{i\,Start}, C_{iStart})$ mit iStart $\in I$, z.B. iStart = min $\{i \in I\}$; iStart $\in J \cup L$ würde eine suboptimale Orientierungsführung ergeben, weil das Startpaar selbst nicht mehr angepasst wird und somit der bei iStart $\in J \cup L$ frei wählbare Parameter t fest vorzugeben wäre;

   f) für alle $j \in \{1, ..., n\}$ abgesehen von j = iStart Bestimmung erweiterter Eulerwinkel $(A_j, B_j, C_j)$ gemäß der

Schritte g) und h), wobei i $\in$ {1, ..., n} ein benachbarter Index ist, d.h. i=j+1 oder i=j-1 und zusätzlich entweder i = iStart ist oder ein Referenzpaar ($A_i$, $B_i$, $C_i$) bereits gemäß der Schritte g) und h) angepasst wurde;

g) für j $\in$ I Bestimmung von

$$d_{j,1} = \min\{|A_{j,1}(g) - A_i| + |B_{j,1}(h) - B_i| + |C_{j,1}(k) - C_i|, \quad g, h, k \in Z\};$$

$$d_{j,2} = \min\{|A_{j,2}(l) - A_i| + |B_{j,2}(m) - B_i| + |C_{j,2}(o) - C_i|, \quad l, m, o \in Z\},$$

wobei das Minimum für g*, h*, k* bzw. l*, m*, o* angenommen wird; und
Auswahl von

$$(A_j, B_j, C_j) = \begin{cases} (A_{j,1}(g^\bullet), B_{j,1}(h^\bullet), C_{j,1}(k^\bullet)), & \text{falls } d_{j,1} \leq d_{j,2} \\ (A_{j,2}(l^\bullet), B_{j,2}(m^\bullet), C_{j,2}(o^\bullet)), & \text{falls } d_{j,1} > d_{j,2}; \end{cases}$$

h) für j $\in$ J oder j $\in$ L Definition von

$$dA_j(t) := |A_j(t) - A_i|$$

$$dB_j(h) := |B_j(h) - B_i|$$

$$dC_j(k,t) := |C_j(k, t) - C_i|$$

mit h, k $\in$ Z und t $\in$ R;
Bestimmung von h* $\in$ Z mit

$$dB_j(h^\bullet) = \min\{dB_j(h), h \in Z\};$$

Bestimmung der Nullstellen von $dA_j(t)$ bzw. $dC_j(k, t)$ bezüglich t, wobei $ta_{0,j}$ die Nullstelle von $dA_j(t)$ und $tc_{0,j}(k)$ die von dem Parameter k abhängige Nullstelle von $dC_j(k, t)$ ist; Wahl von k* $\in$ Z, so dass der Abstand der Nullstellen minimal wird, d.h.

$$|ta_{0,j} - tc_{0,j}(k^\bullet)| = \min\{|ta_{0,j} - tc_{0,j}(k)|, \quad k \in Z\};$$

Wahl von t* beliebig zwischen $ta_{0,j}$ und $tc_{0,j}(k^*)$, da dort immer

$$dA_j(t^*) + dB_j(h^*) + dC_j(k^*,t^*)$$
$$= \min \{dA_j(t) + dB_j(h) + dC_j(k, t),$$
$$t \in R, h, k \in Z\}$$

erfüllt ist; und
Auswahl von

$$(A_j, B_j, C_j) = (A_j(t^*), B_j(h^*), C_j(k^*, t^*));$$

- Interpolation der Tripel $(A_i, B_i, C_i)$ durch einen Spline und Einsetzen der Interpolationsfunktion in die Rotationsmatrix $R(A, B, C)$.

Nach einer bevorzugten Ausgestaltung des vorstehend beschriebenen Algorithmus wird der Parameter $t^*$ gemäß $t^* = 1/2 \, (ta_{0,j} + tc_{0,j}(k^*))$ gewählt. Auf diese Weise ergeben sich betragsmäßig gleich große Orientierungsänderungen im A- und C-Winkel.

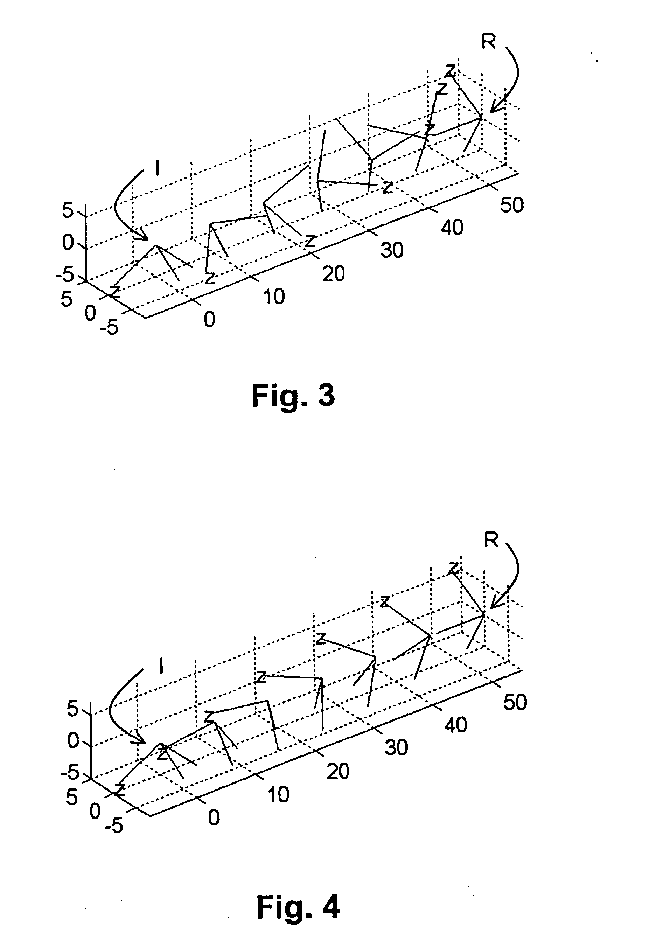

Den Vorteil des vorstehend beschriebenen Algorithmus zur Bestimmung erweiterter Eulerwinkel veranschaulicht folgendes Beispiel, das zeichnerisch in Fig. 3 und 4 dargestellt ist:

Gegeben seien zwei Tripel von Z-Y-X-Eulerwinkeln

$$(A_0, B_0, C_0) = (0, \ \pi/2 - 1/2 \ , \pi)$$

$$(A_1, B_1, C_1) = (\pi/2, \ \pi/2 - 1/2 \ , 0).$$

Führt man diese Werte linear, d.h. durch lineare Interpolation ineinander über, so ergibt sich für die zugehörigen Koordinatendrehungen ein Verlauf, wie er in der Fig. 3 dargestellt ist.

In Fig. 3 ist gezeigt, wie das anfängliche Bezugssystem I durch lineare Interpolation der angularen Gesamtveränderung für jede Koordinatenachse in eine Zielorientierung R überführt wird. Aufgrund der Begrenzung des Wertebereichs für klassische Eulerwinkel ergeben sich dabei unter Umständen wellenartige Bewegungen für einzelne Koordinatenachse, wie in Fig. 3 deutlich anhand der Bewegung der mit z bezeichneten Koordinatenachse ersichtlich ist. Diese erreicht im unteren Bereich der Fig. 3 den Rand ihres Definitionsbereichs und kehrt anschließend wieder in den Bereich kleinerer Werte zurück, wodurch die genannte Wellenbewegung verursacht wird, die ebenso wie die zur Schleifenbildung der Fig. 1a eine unökonomische Art der Orientierungsführung für Roboter darstellt und daher zu vermeiden ist.

Ermittelt man hingegen (ausgehend von der Anfangsorientierung) das angepasste Eulertripel, so ergibt in diesem Fall

$$(-\pi/2, \ \pi/2 + 1/2, \ \pi) = (A_1 + \pi \ -2\pi, \ \pi \ - \ B, \ C_1 + \pi).$$

Die zugehörigen Rotationsmatrizen gehen - wie in Fig. 4 gezeigt - somit auf dem (auch intuitiv) kürzesten Weg ineinander über, wodurch die Roboterbewegung einen wesentlich ökonomischeren Verlauf nimmt, was sich auf die Dauer und den Platzbedarf von Handhabungsvorgängen positiv auswirkt. Ausgeprägte Wellenbewegungen werden im Gegensatz zur Fig. 3 vermieden.

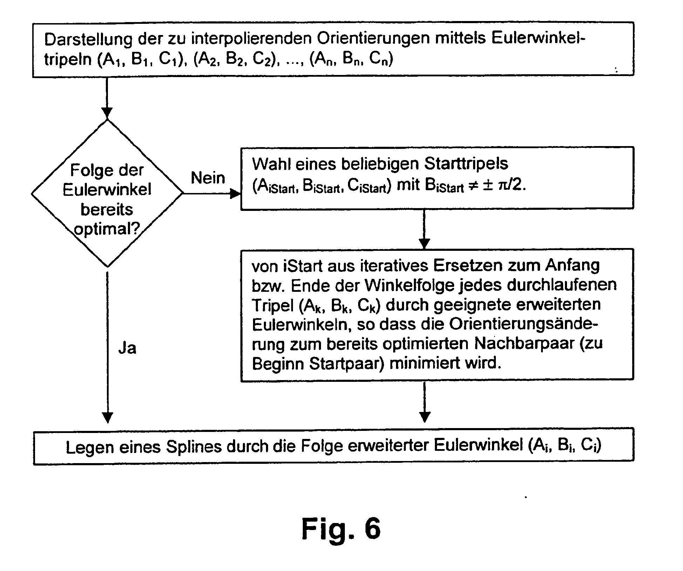

Die erfindungsgemäße Bewegungssteuerung mittels erweiterter Eulerwinkel ist in der nachfolgenden Tabelle 2 und in Fig. 6 anhand eines Ablaufdiagramms nochmals kompakt dargestellt.

Tabelle 2: Algorithmus mit erweiterten Eulerwinkeln

| Aktion | erweiterte Eulerwinkel ermitteln | | | | |
|---|---|---|---|---|---|
| gewöhnliche Eulerwinkel berechnen | $(\bar{A}_1,\bar{B}_1,\bar{C}_1)$ <br><br> $\bar{B}_1 = \pi/2$ | $(\bar{A}_2,\bar{B}_2,\bar{C}_2)$ | . . . | $(\bar{A}_{n\cdot1},\bar{B}_{n\cdot1},\bar{C}_{n\cdot1})$ <br><br> $\bar{B}_{n\cdot1} = -\pi/2$ | $(\bar{A}_n,\bar{B}_n,\bar{C}_n)$ |
| Von iStart aus erweiterte Eulerwinkel bestimmen | $(A_1,B_1,C_1)$ | $(A_2,B_2,C_2)$ <br><br> $=(A_{iStart},$ <br> $B_{iStart},C_{iStart})$ | . . . | $(A_{n\cdot1},B_{n\cdot1},C_{n\cdot1})$ | $(A_n,B_n,C_n)$ |

| Aktion | Orientierung mit erweiterten Eulerwinkeln darstellen. | | | | |
|---|---|---|---|---|---|
| berechne dreidimensionalen Spline durch | $(A_1,B_1,C_1)$ | $(A_2,\ B_2,\ C_2)$ | . . . | $(A_{n\cdot1},B_{n\cdot1},C_{n\cdot1})$ | $(A_n,B_n,C_n)$ |

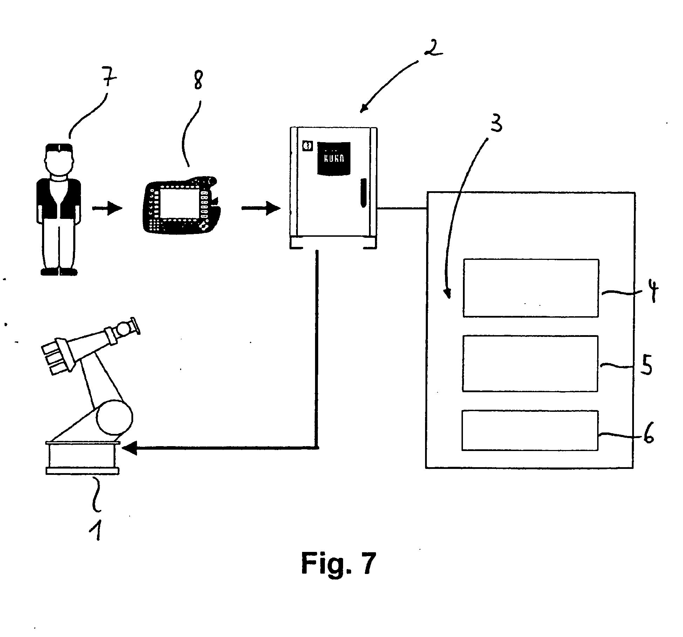

Die Figur 7 zeigt anhand eines Blockschaltbildes eine mögliche Ausgestaltung einer erfindungsgemäßen Vorrichtung, die zum Steuern von Bewegungen eines Handhabungsgeräts nach dem oben beschriebenen Verfahren geeignet ist. Dargestellt ist ein Handhabungsgerät in Form eines Industrieroboters 1 mit einer zugeordneten Steuerungseinrichtung 2, die erfindungsgemäß insbesondere Rechenmittel 3 aufweist, welche als Compiler/Interpreter 4 und als Interpolationseinheit 5 eingerichtet sind und durch welche die vorstehenden Algorithmen zur Bewegungssteuerung steuerungstechnisch implementiert und umgesetzt werden, indem die Rechenmittel 3 innerhalb der Steuerung 2 auf Antriebsmittel 6 des Roboters 1 einwirken. Einer Bedienperson 7 ist es über ein manuell bedienbares Steuergerät 8 möglich, auf die Abläufe in der Steuerung 2, speziell in den Rechenmitteln 3, einzuwirken, beispielsweise durch nachträgliches Programmieren von Umorientierungen des Roboters 1.

**Patentansprüche**

1. Verfahren zur Orientierungsführung eines Handhabungsgeräts, wie eines Industrieroboters, wobei gegebene Punktfolgen von Posen durch Splines interpoliert werden, und die Orientierung durch Quaternionen auf der vierdimensionalen Einheitskugel gemäß

$$q(\alpha,\beta,\varphi) = (\cos(\varphi/2), \sin(\varphi/2) \cdot v(\alpha,\beta)) \qquad (1.1)$$

$$v(\alpha,\beta) = (\cos(\alpha)\cos(\beta), \sin(\alpha)\cos(\beta), \sin(\beta)) \qquad (1.2)$$

dargestellt wird, wobei $\alpha,\beta$ die Kugelkoordinaten der Drehvektoren $v=v(\alpha,\beta)$ angeben;
**gekennzeichnet durch**
Ermitteln von bewegungsoptimalen Paaren $(v_i, \varphi_i)$ durch

a) Anpassen von Vorzeichen der $q_i$ ,so dass

$$q_i{}^T q_{i+1} \geq 0 \text{ für alle } i = 1, \ldots, n-1;$$

b) für alle $i = 1, \ldots, n$ Bestimmung eines möglichen Paares $(v_i, \phi_i)$ mit

$$q_i = (\cos(\tfrac{1}{2}\varphi_i), \sin(\tfrac{1}{2}\varphi_i)\, v_i);$$

c) Auswahl eines beliebigen Startpaares $(v_{iStart}, \varphi_{iStart})$, mit iStart $\in$ I := $\{i = 1, \ldots, n \mid q_i \neq (\pm 1, 0, 0, 0)\}$;

d) für alle $j \in \{1, \ldots, n\}$ mit Ausnahme von $j = $ iStart Bestimmung jeweils genau eines Paares $(v_j, \varphi_j)$ ausgehend von einem Referenzpaar $(v_i, \varphi_i)$ gemäß der Schritte e) bis g), wobei $i \in \{1, \ldots, n\}$ ein benachbarter Index, d.h. i=j+1 oder i=j-1 ist und ferner entweder i = istart gilt oder das Referenzpaar bereits gemäß der Schritte e) bis g) angepaßt wurde;

e) Bestimmung von k*, h* $\in$ Z, so dass

$$|\varphi_{j,1}(k^*) - \varphi_i| = \min\{|\varphi_{j,1}(k) - \varphi_i|,\ k \in Z\}$$
$$= \min\{|\varphi_j + 4k\pi - \varphi_i|,\ k \in Z\},$$

$$|\varphi_{j,2}(h^*) - \varphi_i| = \min\{|\varphi_{j,2}(h) - \varphi_i|,\ h \in Z\}$$
$$= \min\{|-\varphi_j + 4h\pi - \varphi_i|,\ h \in Z\};$$

f) anschließend für $j \in$ I Bestimmung von

$$d_{j,1} = |\arccos(v_i{}^T v_j)| + |\varphi_{j,1}(k^*) - \varphi_i|,$$

$$d_{j,2} = |\arccos(v_i{}^T(-v_j))| + |\varphi_{j,2}(h^*) - \varphi_i|$$

bzw. für $j \notin$ I

$$d_{j,1} = |\varphi_{j,1}(k^*) - \varphi_i|,$$

$$d_{j,2} = |\varphi_{j,2}(h^*) - \varphi_i|;$$

g) anschließend jeweils Auswahl von $(v_j, \varphi_j)$, wobei für $j \in$ I

$$(v_j, \varphi_j) = \begin{cases} (v_j, \varphi_{j,1}(k^*)), & d_{j,1} \leq d_{j,2} \\ (-v_j, \varphi_{j,2}(h^*)), & d_{j,1} > d_{j,2} \end{cases}$$

bzw. für $j \notin$ I

$$(v_j, \; \phi_j) \; = \; \begin{cases} (v_i, \; \phi_{j,1}(k^*)) & \text{falls } d_{j,1} \leq d_{j,2} \\ (v_i, \; \phi_{j,2}(h^*)) & \text{falls } d_{j,1} > d_{j,2}; \end{cases}$$

- Ermitteln von Paaren $(\alpha_i, \beta_i)$ aus den $v_i$ in Kugelkoordinatendarstellung **durch**:

h) Berechnen gewöhnlicher Kugelkoordinaten $(\alpha_i, \beta_i)$ der $v_i$ für alle $i \in I$:

$$v_i \; = \; (\cos(\alpha_i) \; \cos(\beta_i), \; \sin(\alpha_i) \; \cos(\beta_i), \; \sin(\beta_i));$$
$$(1.3)$$

i) Definieren von

$$J \; := \; \{j \; \in \; I \; \text{mit} \; v_j \neq (0, \; 0, \; \pm 1)\}, \qquad (1.4)$$

$$L \; := \; \{j \; \in \; I \; \text{mit} \; v_j = (0, \; 0, \; \pm 1)\} \qquad (1.5)$$

und damit Definition erweiterter Kugelkoordinaten aus R x R

- für $i \in J$:

$$(\alpha_{i,1}(h), \; \beta_{i,1}(k)) = (\alpha_i + 2h\pi, \; \beta_i + 2k\pi),$$
$$h, \; k \in Z; \qquad (1.6)$$

$$(\alpha_{i,2}(l), \; \beta_{i,2}(m)) = (\alpha_i + \pi + 2l\pi, \; \pi - \beta_i + 2m\pi),$$
$$l, \; m \in Z; \qquad (1.7)$$

- für $i \in L$:

$$(\alpha_i(x), \; \beta_i(k)) = (x, \; \beta_i + 2k\pi), \qquad (1.8)$$
$$x \in R, \; k \in Z;$$

j) Festlegen eines beliebigen Startpaares $(\alpha_{jStart}, \beta_{jStart})$ mit jStart $\in$ J;
k) für alle j $\in$ I mit Ausnahme von j = jStart jeweils Bestimmung erweiterter Polarkoordinaten gemäß der Schritte l) und m), wobei i $\in$ I ein benachbarter Index von j ist, so dass kein k $\in$ I zwischen i und j liegt und außerdem entweder i = jStart ist oder das Referenzpaar $(\alpha_i, \beta_i)$ bereits gemäß der Schritte l) und m) angepasst wurde;
l) Bestimmen für j $\in$ J von Werten h*, k*, l*, m* $\in$ Z mit

$$d_{j,1} = \min\{|\alpha_{j,1}(h) - \alpha_i| + |\beta_{j,1}(k) - \beta_i|,$$
$$\text{mit } h, k \in Z\}$$
$$= |\alpha_{j,1}(h^*) - \alpha_i| + |\beta_{j,1}(k^*) - \beta_i|;$$
$$d_{j,2} = \min\{|\alpha_{j,2}(l) - \alpha_i| + |\beta_{j,2}(m) - \beta_i|,$$
$$\text{mit } l, m \in Z\}$$
$$= |\alpha_{j,2}(l^*) - \alpha_i| + |\beta_{j,2}(m^*) - \beta_i|$$

bzw. für $j \in L$ eines Wertes $k^* \in Z$ mit

$$|\beta_j(k^*) - \beta_i| = \min\{|\beta_j(k) - \beta_i|, k \in Z\};$$

m) anschließend Auswählen von $(\alpha_j, \beta_j)$, wobei für $j \in J$

$$(\alpha_j, \beta_j) = \begin{cases} (\alpha_{j,1}(h^*), \beta_{j,1}(k^*)) & d_{j,1} \leq d_{j,2} \\ (\alpha_{j,2}(l^*), \beta_{j,2}(m^*)) & d_{j,1} > d_{j,2} \end{cases}$$

bzw. für $j \in L$
$(\alpha_j, \beta_j) = (\alpha_i, \beta_j(k^*))$;
n) Auswählen einer Anzahl von gemäß der Schritte a) bis m) bestimmter Tripel

$$(\alpha_i, \beta_i, \varphi_i) = \begin{cases} (\alpha_i, \beta_i, \varphi_i) & \text{für } i \in J \\ (*, \beta_i, \varphi_i) & \text{für } i \in L \\ (*, *, \varphi_i) & \text{für } i \notin I, \end{cases}$$

wobei alle mit "*" bezeichneten Komponenten beliebig wählbar sind;
o) Anpassen der wählbaren Komponenten in den Tripeln $(\alpha_i, \beta_i, \varphi_i)$ ;

- Interpolieren der in Schritt n) ausgewählten Tripel $(\alpha_i, \beta_i, \varphi_i)$ **durch** einen Spline; und
- Einsetzen der Interpolationsfunktion in $q(\alpha, \beta, \varphi)$.

**2.** Verfahren nach Anspruch 1, **gekennzeichnet durch** Anpassung der frei wählbaren Komponenten der $(\alpha_i, \beta_i, \varphi_i)$ unter Verwendung von:

$$iMin := \min \{i \in I\}$$

$$iMax := \max \{i \in I\}$$

$$jMin := \min \{j \in J\}$$

$$jMax := \max \{j \in J\},$$

so dass

$$\alpha_p = \begin{cases} \alpha_{jMin} & \text{für} \quad 1 \le p < jMin, \\ \\ \alpha_{jMax} & \text{für} \quad jMax < p \le n \end{cases}$$

und

$$\beta_p = \begin{cases} \beta_{iMin} & \text{für} \quad 1 \le p < iMin, \\ \\ \beta_{iMax} & \text{für} \quad iMax < p \le n. \end{cases}$$

3. Verfahren nach Anspruch 2, **dadurch gekennzeichnet, dass** ferner für benachbarte i, j $\in$ J für alle i < p < j, d.h. p $\notin$ J

$$\alpha_p = \alpha_i + (p - i)/(j - i) \cdot (\alpha_j - \alpha_i)$$

und entsprechend für benachbarte i, j $\in$ I für alle i < p < j, d.h. p $\notin$ I

$$\beta_p = \beta_i + (p - i)/(j - i) \cdot (\beta_j - \beta_i)$$

gewählt wird.

4. Verfahren zur Orientierungsführung eines Handhabungsgeräts, wie eines Industrieroboters, wobei gegebene Punktfolgen von Posen durch Splines interpoliert werden und die Orientierung durch in die gesamte Menge der reellen Zahlen $R^3$ erweiterter Eulerwinkel $A_i$, $B_i$, $C_i \in R$ für i=1,...,n dargestellt wird.

5. Verfahren nach Anspruch 4, **dadurch gekennzeichnet, dass** zur minimalen Umorientierung nacheinander die folgenden Schritte ausgeführt werden, wobei die Eulerwinkel A,B,C ohne Einschränkung der Allgemeinheit Drehungen um die momentane z-Achse, y-Achse bzw. x-Achse angeben:

- Darstellung der Orientierungen $(A_i, B_i, C_i)$ durch:

a) Bestimmung gewöhnlicher Eulerwinkel $(A_i, B_i, C_i)$ ;
b) für I:= {i=1, ..., n | $B_i \neq \pm\pi/2 + 2k\pi$, k $\in$ Z} und i $\in$ I Definition von

$$(A_{i,1}(g), \ B_{i,1}(h), \ C_{i,1}(k))$$
$$= (A_i + 2g\pi, \ B_i + 2h\pi, \ C_i + 2k\pi),$$
$$g, \ h, \ k \in Z; \ \text{und}$$

$$(A_{i,2}(l), \ B_{i,2}(m), \ C_{i,2}(o))$$
$$= (A_i + \pi + 2l\pi, \ \pi - B_i + 2m\pi, \ C_i + \pi + 2o\pi),$$
$$l, \ m, \ o \in Z;$$

c) für J := {i=1, ... , n | $B_i = \pi/2 + 2k\pi$, k $\in$ Z} und i $\in$ J Definition von

$$
\begin{aligned}
(A_i(t), & \ B_i(h), \ C_i(k, \ t)) \\
&= (A_i + t, \ B_i + 2h\pi, \ C_i + t + 2k\pi), \\
& \qquad t \in R, \ h, \ k \in Z;
\end{aligned}
$$

d) für L := {i=1, ..., n | $B_i = -\pi/2 + 2k\pi$, k $\in$ Z} und i $\in$ L Definition von

$$
\begin{aligned}
(A_i(t), & \ B_i(h), \ C_i(k, \ t)) \\
&= (A_i + t, \ B_i + 2h\pi, \ C_i - t + 2k\pi), \\
& \qquad t \in R, \ h, \ k \in Z;
\end{aligned}
$$

e) Auswahl eines beliebigen Startpaares ($A_{iStart}$, $B_{i\text{-}Start}$, $C_{iStart}$) mit iStart $\in$ I;

f) für alle j $\in$ {1, ..., n} abgesehen von j = iStart) Bestimmung erweiterter Eulerwinkel ($A_j$, $B_j$, $C_j$) gemäß der Schritte g) und h), wobei i $\in$ {1, ..., n} ein benachbarter Index ist, d.h. i=j+1 oder i=j-1 und zusätzlich entweder i = iStart ist oder ein Referenzpaar ($A_i$, $B_i$, $C_i$) bereits gemäß der Schritte g) und h) angepasst wurde;

g) für j $\in$ I Bestimmung von

$$
\begin{aligned}
d_{j,1} \ = \ \min\{ |A_{j,1}(g) \ - \ A_i| \ + \ |B_{j,1}(h) \ - \ B_i| \ + \\
|C_{j,1}(k) \ - \ C_i|, \quad g, \ h, \ k \in Z\};
\end{aligned}
$$

$$
\begin{aligned}
d_{j,2} \ = \ \min\{ |A_{j,2}(l) \ - \ A_i| \ + \ |B_{j,2}(m) \ - \ B_i| \ + \\
|C_{j,2}(o) \ - \ C_i|, \quad l, \ m, \ o \in Z\},
\end{aligned}
$$

wobei das Minimum für g\*, h\*, k\* bzw. l\*, m\*, o\* angenommen wird; und
Auswahl von

$$
(A_j, \ B_j, \ C_j) = \begin{cases} (A_{j,1}(g^*), \ B_{j,1}(h^*), \ C_{j,1}(k^*)), \\ \qquad \text{falls } d_{j,1} \leq d_{j,2} \\ (A_{j,2}(l^*), \ B_{j,2}(m^*), \ C_{j,2}(o^*)), \\ \qquad \text{falls } d_{j,1} > d_{j,2}; \end{cases}
$$

h) für j $\in$ J oder j $\in$ L Definition von

$$
dA_j(t) \qquad := \ |A_j(t) \ - \ A_i|
$$

$$
dB_j(h) \qquad := \ |B_j(h) \ - \ B_i|
$$

$$dC_j(k,t) \quad := \quad |C_j(k, t) - C_i|$$

mit h, k $\in$ Z und t $\in$ R;
Bestimmung von h* $\in$ Z mit

$$dB_j(h^*) = \min\{dB_j(h), \ h \in Z\};$$

Berechnung der Nullstellen von $dA_j(t)$ bzw. $dC_j(k, t)$ bezüglich t, wobei $ta_{0,j}$ die Nullstelle von $dA_j(t)$ und $tc_{0,j}(k)$ die Nullstelle von $dC_j(k, t)$ ist;
Wahl von k* $\in$ Z, so dass der Abstand der Nullstellen minimal wird, d.h.

$$|ta_{0,j} - tc_{0,j}(k^*)| = \min\{|ta_{0,j} - tc_{0,j}(k)|,$$
$$k \in Z\};$$

Wahl von t* beliebig zwischen $ta_{0,j}$ und $tc_{0,j}(k^*)$; und
Auswahl von

$$(A_j, B_j, C_j) = (A_j(t^*), B_j(h^*), C_j(k^*, t^*));$$

- Interpolation der Tripel $(A_i, B_i, C_i)$ durch einen Spline und Einsetzen der Interpolationsfunktion in die Rotationsmatrix R(A, B, C).

6. Verfahren nach Anspruch 5, **dadurch gekennzeichnet, dass** t* = ½ ($ta_{0,j}$ + $tc_{0,j}(k^*)$) gewählt wird.

7. Verfahren nach einem der Ansprüche 1 bis 6, **dadurch gekennzeichnet, dass** Positionen des Handhabungsgeräts getrennt von deren Orientierungen parametrisiert werden.

8. Verfahren nach einem der Ansprüche 1 bis 7, **dadurch gekennzeichnet, dass** Bewegungen von Zusatzachsen getrennt von den Positionen und/oder den Orientierungen des Handhabungsgeräts parametrisiert werden.

9. Vorrichtung zur Orientierungsführung eines Handhabungsgeräts, wie eines Roboters, mit einer Interpolationseinrichtung zur Interpolation einer gegebenen Punktfolge von Posen durch Splines, wobei die Interpolationseinrichtung eingerichtet ist zur Darstellung der Orientierung durch Quaternionen auf der vierdimensionalen Einheitskugel gemäß $q(\alpha, \beta, \varphi)$ = (cos ($\varphi$/2), sin ($\varphi$/2 ) v ($\alpha, \beta$)) sowie zur Durchführung der nachfolgenden Schritte:

- Darstellung jedes Quaternions auf der vierdimensionalen Einheitskugel gemäß

$$q(\alpha, \beta, \varphi) = (\cos(\tfrac{1}{2} \varphi), \sin(\tfrac{1}{2} \varphi) \cdot v(\alpha, \beta))$$

mit

$$v(\alpha, \beta) = (\cos(\alpha) \cos(\beta), \sin(\alpha) \cos(\beta), \sin(\beta)),$$

wobei $\alpha$, $\beta$, (und r=1) die Kugelkoordinaten der Drehvektoren v = v($\alpha, \beta$) angeben;

- Ermittlung von bewegungsoptimalen Paaren ($v_i$, $\varphi_i$) durch

a) Anpassen von Vorzeichen der $q_i$ ,so dass

$$q_i{}^T q_{i+1} \geq 0 \text{ für alle } i = 1,...,n-1;$$

b) für alle $i = 1,...,n$ Bestimmung eines möglichen Paares $(v_i, \phi_i)$ mit

$$q_i = (\cos(\tfrac{1}{2}\varphi_i),\ \sin(\tfrac{1}{2}\varphi_i)\ v_i);$$

c) Auswahl eines beliebigen Startpaares $(v_{iStart}, \varphi_{iStart})$, mit iStart $\in$ I := {1 = 1,...,n | $q_i \neq (\pm 1, 0, 0, 0)$};

d) für alle $j \in$ {1,...,n} mit Ausnahme von j = istart Bestimmung jeweils genau eines Paares $(v_j, \varphi_j)$ ausgehend von einem Referenzpaar $(v_i, \varphi_i)$ gemäß der Schritte e) bis g), wobei $i \in$ {1,...,n} ein benachbarter Index, d.h. i=j+1 oder i=j-1 ist und ferner entweder i = istart gilt oder das Referenzpaar bereits gemäß der Schritte e) bis g) angepaßt wurde;

e) Bestimmung von k*, h* $\in$ Z, so dass

$$|\varphi_{j,1}(k^*) - \varphi_i| = \min\{|\varphi_{j,1}(k) - \varphi_i|,\ k \in Z\}$$
$$= \min\{|\varphi_j + 4k\pi - \varphi_i|,\ k \in Z\},$$

$$|\varphi_{j,2}(h^*) - \varphi_i| = \min\{|\varphi_{j,2}(h) - \varphi_i|,\ h \in Z\}$$
$$= \min\{|- \varphi_j + 4h\pi - \varphi_i|,\ h \in Z\};$$

f) anschließend für $j \in$ I Bestimmung von

$$d_{j,1} = |\arccos(v_i{}^T v_j)| + |\varphi_{j,1}(k^*) - \varphi_i|,$$

$$d_{j,2} = |\arccos(v_i{}^T(-v_j))| + |\varphi_{j,2}(h^*) - \varphi_i|$$

bzw. für $j \notin$ I

$$d_{j,1} = |\varphi_{j,1}(k^*) - \varphi_i|,$$

$$d_{j,2} = |\varphi_{j,2}(h^*) - \varphi_i|;$$

g) anschließend jeweils Auswahl von $(v_j, \varphi_j)$, wobei für $j \in$ I

$$(v_j,\ \varphi_j) = \begin{cases} (v_j,\ \varphi_{j,1}(k^*)), & d_{j,1} \leq d_{j,2} \\ (-v_j,\ \varphi_{j,2}(h^*)), & d_{j,1} > d_{j,2} \end{cases}$$

bzw. für $j \notin$ I

$$(v_j,\ \varphi_j) = \begin{cases} (v_i,\ \varphi_{j,1}(k^*)) & \text{falls } d_{j,1} \leq d_{j,2} \\ (v_i,\ \varphi_{j,2}(h^*)) & \text{falls } d_{j,1} > d_{j,2}; \end{cases}$$

- Ermittlung von Paaren $(\alpha_i, \beta_i)$ aus den $v_i$ in Kugelkoordinatendarstellung durch:

h) Berechnung gewöhnlicher Kugelkoordinaten $(\alpha_i, \beta_i)$ der $v_i$ für alle i I:

$$v_i = (\cos(\alpha_i)\ \cos(\beta_i),\ \sin(\alpha_i)\ \cos(\beta_i),\ \sin(\beta_i));$$

i) Definition von

$$J := \{j \in I \text{ mit } v_j \neq (0,\ 0,\ \pm 1)\},$$

$$L := \{j \in I \text{ mit } v_j = (0,\ 0,\ \pm 1)\}$$

und damit Definition erweiterter Kugelkoordinaten aus R x R

- für i $\in$ J:

$$(\alpha_{i,1}(h),\ \beta_{i,1}(k)) = (\alpha_i + 2h\pi,\ \beta_i + 2k\pi),$$
$$h,\ k \in Z;$$

$$(\alpha_{i,2}(l),\ \beta_{i,2}(m)) = (\alpha_i + \pi + 2l\pi,\ \pi - \beta_i + 2m\pi),$$
$$l,\ m \in Z;$$

- für i $\in$ L:

$$(\alpha_i(x),\ \beta_i(k)) = (x,\ \beta_i + 2k\pi),$$
$$x \in R,\ k \in Z;$$

j) Festlegen eines beliebigen Startpaares $(\alpha_{jStart}, \beta_{jStart})$ mit jStart $\in$ J;
k) für alle j $\in$ I mit Ausnahme von j = jStart) jeweils einmal Bestimmung erweiterter Polarkoordinaten gemäß der Schritte 1) und m), wobei i $\in$ I ein benachbarter Index von j ist, so dass kein k $\in$ I zwischen i und j liegt und außerdem entweder i = jStart ist oder das Referenzpaar $(\alpha_i, \beta_i)$ bereits gemäß der Schritte l) und m) angepasst wurde;
1) Bestimmung für j $\in$ J von Werten h*, k*, l*, m* $\in$ Z mit

$$d_{j,1} = \min\{|\alpha_{j,1}(h) - \alpha_i| + |\beta_{j,1}(k) - \beta_i|,$$

$$\text{mit } h, k \in Z\}$$

$$= |\alpha_{j,1}(h^*) - \alpha_i| + |\beta_{j,1}(k^*) - \beta_i|;$$

$$d_{j,2} = \min\{|\alpha_{j,2}(l) - \alpha_i| + |\beta_{j,2}(m) - \beta_i|,$$

$$\text{mit } l, m \in Z\}$$

$$= |\alpha_{j,2}(l^*) - \alpha_i| + |\beta_{j,2}(m^*) - \beta_i|$$

bzw. für $j \in L$ eines Wertes $k^* \in Z$ mit

$$|\beta_j(k^*) - \beta_i| = \min\{|\beta_j(k) - \beta_i|, k \in Z\};$$

m) anschließend Auswahl von $(\alpha_j, \beta_j)$, wobei für $j \in J$

$$(\alpha_j, \beta_j) = \begin{cases} (\alpha_{j,1}(h^*), \beta_{j,1}(k^*)), & d_{j,1} \le d_{j,2} \\ (\alpha_{j,2}(l^*), \beta_{j,2}(m^*)), & d_{j,1} > d_{j,2} \end{cases}$$

bzw. für $j \in L$
$(\alpha_j, \beta_j) = (\alpha_i, \beta_j(k^*))$;
n) Auswahl einer Anzahl von gemäß der Schritte a) bis m) bestimmter Tripel

$$(\alpha_i, \beta_i, \varphi_i) = \begin{cases} (\alpha_i, \beta_i, \varphi_i) & \text{für } i \in J \\ (*, \beta_i, \varphi_i) & \text{für } i \in L \\ (*, *, \varphi_i) & \text{für } i \notin I, \end{cases}$$

wobei alle mit "*" bezeichneten Komponenten beliebig wählbar sind;
o) Anpassen der wählbaren Komponenten in den Tripeln $(\alpha_i, \beta_i, \varphi_i)$ ;

- Interpolation der in Schritt n) ausgewählten Tripel $(\alpha_i, \beta_i, \varphi_i)$ durch einen Spline; und
- Einsetzen der Interpolationsfunktion in $q(\alpha, \beta, \varphi)$.

**10.** Vorrichtung nach Anspruch 9, **dadurch gekennzeichnet, dass** die Interpolationseinrichtung zur Anpassung der frei wählbaren Komponenten der $(\alpha_i, \beta_i, \phi_i)$ unter Verwendung von:

$$\text{iMin}:= \min \{i \in I\}$$

$$\text{iMax}:= \max \{i \in I\}$$

$$\text{jMin}:= \min \{j \in J\}$$

$$jMax := max\ \{j \in J\}$$

derart eingerichtet ist, dass

$$\alpha_p = \begin{cases} \alpha_{jMin} & \text{für}\quad 1 \le p < jMin, \\ \alpha_{jMax} & \text{für}\quad jMax < p \le n \end{cases}$$

und

$$\beta_p = \begin{cases} \beta_{iMin} & \text{für}\quad 1 \le p < iMin, \\ \beta_{iMax} & \text{für}\quad iMax < p \le n. \end{cases}$$

**11.** Vorrichtung nach Anspruch 10, **dadurch gekennzeichnet, dass** die Interpolationseinrichtung für benachbarte i, j $\in$ J für alle i < p < j, d.h. p $\notin$ I zur Bestimmung von

$$\alpha_p = \alpha_i + (p - i)/(j - i) \cdot (\alpha_j - \alpha_i)$$

und entsprechend für benachbarte i, j $\in$ I für alle i < p < j, d.h. p $\notin$ I zur Bestimmung von

$$\beta_p = \beta_i + (p - i)/(j - i) \cdot (\beta_j - \beta_i)$$

eingerichtet ist.

**12.** Vorrichtung zur Orientierungsführung eines Handhabungsgeräts, wie eines Industrieroboters, mit einer Interpolationseinrichtung zur Interpolation einer gegebenen Punktfolge von Posen durch Splines, wobei die Interpolationseinrichtung eingerichtet ist zur Darstellung der Orientierung durch in die gesamte Menge der reellen Zahlen $R^3$ erweiterter Eulerwinkel $A_i$, $B_i$, $C_i \in R$ für i=1,...,n.

**13.** Vorrichtung nach Anspruch 12, **dadurch gekennzeichnet, dass** die Interpolationseinrichtung zur sequentiellen Ausführung folgender Schritte eingerichtet ist:

- Darstellung der Orientierungen ($A_i$, $B_i$, $C_i$) durch:

    a) Bestimmung gewöhnlicher Eulerwinkel ($A_i$, $B_i$, $C_i$);
    b) für I:= {i=1, ..., n | $B_i \ne \pm\pi/2 + 2k\pi$, k $\in$ Z} und i $\in$ I Definition von

$$(A_{i,1}(g),\ B_{i,1}(h),\ C_{i,1}(k))$$
$$= (A_i + 2g\pi,\ B_i + 2h\pi,\ C_i + 2k\pi),$$
$$g,\ h,\ k \in Z;\ und$$

$$(A_{i,2}(l), \; B_{i,2}(m), \; C_{i,2}(o))$$
$$= (A_i + \pi + 2l\pi, \; \pi - B_i + 2m\pi, \; C_i + \pi + 2o\pi),$$
$$l, \; m, \; o \in Z;$$

c) für $J := \{i=1, ..., n \mid B_i = \pi/2 + 2k\pi, k \in Z\}$ und $i \in J$ Definition von

$$(A_i(t), \; B_i(h), \; C_i(k, \; t))$$
$$= (A_i + t, \; B_i + 2h\pi, \; C_i + t + 2k\pi),$$
$$t \in R, \; h, \; k \in Z;$$

d) für $L := \{i=1, ..., n \mid B_i = -\pi/2 + 2k\pi, k \in Z\}$ und $i \in L$ Definition von

$$(A_i(t), \; B_i(h), \; C_i(k, \; t))$$

$$= (A_i + t, \; B_i + 2h\pi, \; C_i - t + 2k\pi),$$
$$t \in R, \; h, \; k \in Z;$$

e) Auswahl eines beliebigen Startpaares $(A_{istart}, B_{i\text{-Start}}, C_{iStart})$ mit iStart $\in$ I;
f) für alle $j \in \{1, ..., n\}$ abgesehen von j = iStart) Bestimmung erweiterter Eulerwinkel $(A_j, B_j, C_j)$ gemäß der Schritte g) und h), wobei $i \in \{1, ..., n\}$ ein benachbarter Index ist, d.h. i=j+1 oder i=j-1 und zusätzlich entweder i = iStart ist oder ein Referenzpaar $(A_i, B_i, C_i)$ bereits gemäß der Schritte g) und h) angepasst wurde;
g) für $j \in I$ Bestimmung von

$$d_{j,1} = \min\{|A_{j,1}(g) - A_i| + |B_{j,1}(h) - B_i| + |C_{j,1}(k) - C_i|, \; g, \; h, \; k \in Z\};$$

$$d_{j,2} = \min\{|A_{j,2}(l) - A_i| + |B_{j,2}(m) - B_i| + |C_{j,2}(o) - C_i|, \; l, \; m, \; o \in Z\},$$

wobei das Minimum für g*, h*, k* bzw. l*, m*, o* angenommen wird; und
Auswahl von

$$(A_j, \; B_j, \; C_j) = \begin{cases} (A_{j,1}(g^*), \; B_{j,1}(h^*), \; C_{j,1}(k^*)), \\ \quad \text{falls } d_{j,1} \leq d_{j,2} \\ (A_{j,2}(l^*), \; B_{j,2}(m^*), \; C_{j,2}(o^*)), \\ \quad \text{falls } d_{j,1} > d_{j,2}; \end{cases}$$

h) für $j \in J$ oder $j \in L$ Definition von

$$dA_j(t) \quad := \quad |A_j(t) - A_i|$$

$$dB_j(h) \quad := \quad |B_j(h) - B_i|$$

$$dC_j(k,t) \quad := \quad |C_j(k, t) - C_i|$$

mit $h, k \in Z$ und $t \in R$;
Bestimmung von $h^* \in Z$ mit

$$dB_j(h^*) = \min\{dB_j(h), \ h \in Z\};$$

Bestimmung der Nullstellen von $dA_j(t)$ bzw. $dC_j(k, t)$ bezüglich $t$, wobei $ta_{0,j}$ die Nullstelle von $dA_j(t)$ und $tc_{0,j}(k)$ die Nullstelle von $dC_j(k, t)$ ist;
Wahl von $k^* \in Z$, so dass der Abstand der Nullstellen minimal wird, d.h.

$$|ta_{0,j} - tc_{0,j}(k^*)| = \min\{|ta_{0,j} - tc_{0,j}(k)|, \quad k \in Z\};$$

Wahl von $t^*$ beliebig zwischen $ta_{0,j}$ und $tc_{0,j}(k^*)$ ; und
Auswahl von

$$(A_j, B_j, C_j) = (A_j(t^*), B_j(h^*), C_j(k^*, t^*));$$

- Interpolation der Tripel $(A_i, B_i, C_i)$ durch einen Spline und Einsetzen der Interpolationsfunktion in die Rotationsmatrix $R(A, B, C)$.

**14.** Vorrichtung nach Anspruch 13, **dadurch gekennzeichnet, dass** die Interpolationseinrichtung zur Auswahl von $t^*$ = ½ ($ta_{0,j}$ + $tc_{0,j}(k^*)$) eingerichtet ist.

**15.** Vorrichtung nach einem der Ansprüche 9 bis 14, **dadurch gekennzeichnet, dass** die Interpolationseinrichtung zur getrennten Parametrisierung von Positionen und Orientierungen des Handhabungsgeräts ausgebildet ist.

**16.** Vorrichtung nach einem der Ansprüche 9 bis 15, **dadurch gekennzeichnet, dass** die Interpolationseinrichtung zur getrennten Parametrisierung einerseits von Bewegungen von Zusatzachsen und andererseits von Positionen und/ oder Orientierungen des Handhabungsgeräts ausgebildet ist.

**Claims**

**1.** A method for the orientation guidance of a handling device, such as an industrial robot, wherein given point sequences of poses are interpolated by splines and the orientation is represented by quaternary ions on the four-dimensional unit sphere according to

$$q(\alpha,\beta,\varphi) = (\cos(\varphi/2), \sin(\varphi/2 . v(\alpha,\beta)) \qquad (1.1)$$

$$v(\alpha,\beta) = (\cos(\alpha) \cos(\beta),\ \sin(\alpha) \cos(\beta),\ \sin(\beta)) \qquad (1.2)$$

wherein $\alpha,\beta$ indicate the spherical coordinates of the rotation vectors $v = v(\alpha,\beta)$;
**characterised by**
determining movement-optimum pairs $(v_i, \varphi_i$ by

a) adapting prefixes of $q_i$, so that

$$q_i^T q_{i+1} \geq 0 \text{ for all } i = 1,...,n-1;$$

b) for all $i = 1,...,n$, determination of a possible pair $(v_i, \varphi_i)$ with

$$q_i = (\cos(1/2\ \varphi_i),\ \sin(1/2\ \varphi_i)\ v_i);$$

c) Selection of any starting pair $(v_{iStart}, \varphi_{iStart})$, with $iStart \in I ::= \{i = 1, ..., n \mid q_i \# (\pm 1, 0, 0, 0)\}$;
d) For all j's $\in \{1,...,n\}$ with the exception of $j = iStart$, exact determination of a pair $(v_j, \varphi_j$, from a reference pair $(v_i, \varphi_i)$ according to steps e) to g), where $i \in (1,...,n)$ is an adjacent index, i.e. $i=j+1$ or $i=j-1$ and also where either $i = iStart$, or the reference pair has already been adapted according to steps e) to g)
e) Determination of $k^*, h^* \in Z$, so that

$$|\varphi_{j,1}(k^*) - \varphi_i| = \min\{\ |\varphi_{j,l}(k) - \varphi_i|, k \in z\ \}$$
$$= \min\{\ |\varphi_j + 4k\pi - \varphi_i|, k \in Z\},$$

$$|\varphi_{j,2}(h^*) - \varphi_i| = \min\{|\varphi_{j,2}(h) - \varphi_i|, h \in Z\}$$
$$= \min\{| = \varphi_j + 4h\pi - \varphi_i|, h \in Z\};$$

f) Then for $j \in I$, determination of

$$d_{j,1} = |arcos(v_i^T v_j)| + |\varphi_{j,1}(k^*) - \varphi_i|,$$

$$d_{j,2} = |arcos(v_i^T(-v_j))| + |\varphi_{j,2}(h^*) - \varphi_i|$$

and for $j \notin I$

$$d_{j,1} = |\varphi_{j,1}(k^*) - \varphi_i|,$$

$$d_{j,2} = |\varphi_{j,2}(h^*) - \varphi_i|;$$

g) Then selection of $(v_j\ \varphi_j)$, where for $j \in I$

$$\left(v_j, \varphi_j - \begin{cases} v_j, \varphi_{j,1}(k^*)), & d_{j,1} \leq d_{j,2} \\ (-v_j, \varphi_{j,2}(h^*)), & d_{j,1} > d_{j,2} \end{cases}\right.$$

or for $j \notin I$

$$\left(v_j, \varphi_j - \begin{cases} v_i, \varphi_{j,1}(k^*)), & \text{if } d_{j,1} \leq d_{j,2} \\ (-v_i, \varphi_{j,2}(h^*)), & \text{if } d_{j,1} > d_{j,2}; \end{cases}\right.$$

Determination of pairs $(\alpha_i, \beta_i)$ from the $v_i$'s in spherical coordinate representation by:

h) Calculating normal spherical coordinates

$(\alpha_i, \beta_i)$ of the $v_i$'s for all i's $\in$ I:

$$V_i = (\cos(\alpha_i)\cos(\beta_i), \sin(\alpha_i)\cos(\beta_i)\sin\beta_i)); \qquad (1.3)$$

i) Defining

$$J := \{j \in I \text{ with } v_j \neq (0, 0, \pm 1)\}. \qquad (1.4)$$

$$L := \{j \in I \text{ with } v_j - (0, 0, \pm 1) \qquad (1.5)$$

and hence definition of expanded spherical coordinates from R x R

- for $i \in J$:

$$(\alpha_{i,1}(h), \beta_{i,1}(k)) = (\alpha_i + 2h\pi, \beta_i + 2k\pi),$$
$$h, k \in Z; \qquad (1.6)$$

$$(\alpha_{1,2}(1), \beta_{i,2}(m)) = (\alpha_i + \pi + 21\pi, \pi - \beta_i + 2m\pi),$$
$$l, m \in Z; \qquad (1.7)$$

- for $i \in L$:

$$(\alpha_i(x), \beta_i(k)) = (x, \beta_i + 2k\pi), \qquad (1.8)$$
$$x \in R, k \in Z;$$

j) Establishment of any start pair $(\alpha_{jstart}, \beta_{jstart})$ with jstart $\in$ J;

k) for all j's $\in$ I, with the exception of j - jstart, always determination of expanded polar coordinates according to steps l) and m), wherein i $\in$ I is an adjacent index of j, so that no k $\in$ I lies between i and j, and is, moreover, either i = jstart or the reference pair $(\alpha_i, \beta_i)$ has already been adapted according to steps l) and m);

l) Determination for j $\in$ J of values h*, k*, l*, m* $\in$ Z with

$$d_{j,l} = \min \{ \, | \, \alpha_{j,l} (h) - \alpha_i \, | + | \, \beta_{j,l} (k) - \beta_i \, |,$$

$$\text{with } h, k \in Z\}$$

$$= | \, \alpha_{j,l} (h^*) - \alpha_i \, | + | \, \beta_{j,l} (k^*) - \beta_i \, |;$$

$$d_{j,2} = \min \{ |\alpha_{j,2} (1) - \alpha_i \, | + \beta_{j,2} (m) - \beta_i |,$$

$$\text{with } l, m \in Z\}$$

$$= |\alpha_{j,2} (l^*) - \alpha_i \, | + | \, \beta_{j,2} (m^*) - \beta_i \, |$$

or for j $\in$ L of a value k* $\in$ Z with

$$|\beta_j (k^*) - \beta_i \, | = \min \{ \, | \, \beta_j (k) - \beta_i, |, k \in Z\};$$

m) then selection of $(\alpha_j, \beta_j)$, wherein for j $\in$ J

$$(\alpha_j, \beta_j) = \begin{cases} \alpha_{j,1} (h^*), \beta_{j,1} (k^*) \, ) & d_{j,1} \leq d_{j,2} \\ \\ ( \, .\alpha_{j,2} (l^*), \beta_{j,2}(m^*)) & d_{j,1} > d_{j,2} \end{cases}$$

or for j $\in$ L

$$(\alpha_j, \beta_j) = (\alpha_i, \beta_j (k^*));$$

n) Selection of a number of triples determined according to steps a) to m)

$$(\alpha_i, \beta_i, \varphi_i) = \begin{cases} \alpha_i, \beta_i, \varphi_i & \text{for } i \in J \\ (^*, \beta_i, \varphi_i) & \text{for } i \in L \\ (^*, ^*, \varphi_i) & \text{for } i \notin I, \end{cases}$$

Wherein all the components denoted by "*" are freely selectable;

o) Adaptation of the selectable components in the triples $(\alpha_i, \beta_i, \varphi_i)$;

- Interpolation of the triples $(\alpha_i, \beta_i, \varphi_i)$ selected in step n) by means of a spline; and
- Insertion of the interpolation function in q $(\alpha, \beta, \varphi)$.

2. The method according to Claim 1, **characterised by** the adaptation of the freely selectable components of $(\alpha_i, \beta_i, \varphi_i)$ using:

$$\text{iMin: } = \min \{i \in I\}$$

$$\text{iMax: } = \max \{i \in I\}$$

$$\text{jMin: } = \min \{j \in J\}$$

$$\text{jMax:} = \max \{j \in J),$$

so that

$$\alpha_p = \begin{cases} \alpha_{jMin} & \text{for } 1 \le p \not< jMin, \\ \\ \alpha_{jMax} & \text{for } jMax < p \le n \end{cases}$$

and

$$\beta_p = \begin{cases} \beta_{iMin} & \text{for } I \le p \not< iMin, \\ \\ \beta_{iMax} & \text{for } iMax < p \le n. \end{cases}$$

**3.** The method according to Claim 2, **characterised in that**, furthermore, for adjacent i's, j ∈ J for all i < p < j, i.e. p ∉ J

$$\alpha_p = \alpha_i + (p - i) / (j - i) \cdot (\alpha_j - \alpha_i)$$

and correspondingly for adjacent i's, j ∈ I is selected for all i < p < j, i.e. p ∉ I

$$\beta_p = \beta_i + (p - i) / (j - i) \cdot (\beta_j - \beta_i).$$

**4.** A method for the orientation guidance of a handling device, such as an industrial robot, wherein given point sequences of poses are interpolated by splines and the orientation is represented by Euler angles $A_i$, $B_i$, $C_i \in R$ for i=1, ..., n expanded into the total sum of the real numbers $R^3$.

**5.** The method according to Claim 4, **characterised in that** the following steps are performed one after the other for minimum reorientation, wherein the Euler angles A, B, C indicate rotations about the instantaneous z-axis, y-axis and x-axis, respectively, without restricting the generality:

   - Representation of the orientations ($A_i$, $B_i$, $C_i$) by:

      a) determining normal Euler angles ($A_i$, $B_i$, $C_i$);
      b) for I:= {i=1, ..., n | $B_i \ne \pm\pi/2 + 2k\pi$, k ∈ Z}
      and i $\pi$ | definition of

$$(A_{i,1}\,(g),\,B_{i,1}\,(h),\,C_{i,1}\,(k))$$

$$= (A_i + 2g\pi,\,B_i + 2h\pi,\,C_i + 2k\pi),$$

$$g,\,h,\,k \in Z;\text{ and}$$

$$(A_{i,2}\,(l),\,B_{i,2}\,(m),\,C_{i,2}\,(o)\,)$$

$$= (A_i + \pi + 2l\pi,\,\pi - B_i + 2m\pi,\,C_i + \pi + 2\,o\pi),$$

$$l,\,m,\,o \in Z;$$

c) for $J := \{i=1, ..., n\,|B_i = \pi/2 + 2k\pi,\,k \in Z\}$
and $i \in J$ definition of

$$(A_i\,(t),\,B_i\,(h),\,C_i\,(k,\,t\,)\,)$$

$$= A_i + t,\,B_i + 2h\pi,\,C_i + t + 2k\pi),$$

$$t \in R,\,h,\,k \in Z;$$

d) for $L := \{i=1, ..., n\,|\,B_i = -\pi/2 + 2k\pi,\,k \in Z\}$
and $i \in L$ definition of

$$(A_i\,(t),\,B_i\,(h),\,C_i\,(k,\,t)\,)$$

$$= (A_i + t,\,B_i + 2h\pi,\,C_i - t + 2k\pi),$$

$$t \in R,\,h,\,k \in Z;$$

e) Selection of any start pair $(A_{iStart},\,B_{iStart},\,C_{iStart})$ with $iStart \in I$;
f) for all $j \in (\{, ..., n\}$ apart from $j = iStart$), determination of expanded Euler angles $(A_j,\,B_j,\,C_j)$ according to steps g) and h), wherein $i \in \{I, ..., n\}$ is an adjacent index, i.e. $i = j+1$ or $i=j-1$, and either $i =$ also iStart, or a reference pair $(A_i,\,B_i,\,C_i)$ has already been adapted according to steps g) and h);
g) for $j \in I$, determination of

$$d_{j,1} = \min \{\,|\,A_{j,1}\,(g) - A_i\,| + |\,B_{j,1}\,(h) - B_i\,| +$$

$$|\,C_{j,1}\,(k) - C_i|,\,g,\,h,\,k \in Z\};$$

$$d_{j,2} = \min \{|A_{j,2}\,(l) - A_i\,| + |\,B_{j,2}\,(m) - B_i\,| +$$

$$| C_{j,2}(o) - C_i |, \ l, m, o \in Z\},$$

wherein the minimum for g*, h*, k* and l*, m*, o* is assumed; and selection of

$$(A_j, B_j, C_j) = \begin{cases} (A_{j,1}(g^*), B_{j,1}(h^*), C_{j,1}(k^*)), & \text{if } d_{j,1} \leq d_{j,2} \\[2em] (A_{j,2}(l^*), B_{j,2}(m^*), C_{j,2}(o^*)), & \text{if } d_{j,1} > d_{j,2}; \end{cases}$$

h) for $j \in J$ or $j \in L$, definition of

$$dA_j(t) := |A_j(t) - A_i|$$

$$dB_j(h) := |B_j(h) - B_i|$$

$$dC_j(k, t) := |C_j(k, t) - C_i|$$

with $h, k \in Z$ and $t \in R$;
determination of $h^* \in Z$ with

$$dB_j(h^*) = \min\{dB_j(h), h \in Z\};$$

Calculation of the zeroes of $dA_j(t)$ or $dC_j(k, t)$ or t, wherein $ta_{0,j}$ is the zero of $dA_j(t)$ and $tc_{0,j}(k)$ is the zero of $dC_j(k, t)$;
choice of $k^* \in Z$, so that the distance between the zeroes is minimal, i.e.

$$| ta_{0,j} - tc_{0,j}(k^*) | = \min \{|ta_{0,j} - tc_{0,j}(k)|, \ k \in Z\};$$

choice of t* arbitrary between $ta_{0,j}$ and $tC_{0,j}(k^*)$;
and
selection of

$$(A_j, B_j, C_j) = (A_j(t^*), B_j (h^*), C_j (k^*, t^*) );$$

- Interpolation of the triples $(A_i, B_i, C_i$ by a spline and insertion of the interpolation function in the rotation matrix R (A, B, C).

6. The method according to Claim 5, **characterised in that** $t^* = 1/2 (ta_{0,j} + tc_{0,j} (k^*))$ is selected.

7. The method according to one of Claims 1 to 6, **characterised in that** positions of the handling device are parameterised separately from their orientations.

8. The method according to one of Claims 1 to 7, **characterised in that** movements of additional axes are parameterised separately from the positions and/or the orientations of the handling device.

9. A device for orientation guidance of a handling device, such as a robot, with an interpolation device for interpolation of a given point sequence of poses by splines, wherein the interpolation device is designed to represent the orientation by quaternary ions on the four-dimensional unit sphere according to
$q(\alpha, \beta, \varphi) = (\cos (\varphi/2), \sin (\varphi/2) v (\alpha, \beta)$ and for performing the following steps:

- Representation of each quaternary ion on the four- dimensional unit sphere according to

$$q (\alpha, \beta, \varphi) = (\cos (1/2 \varphi), \sin (1/2 \varphi) . v (\alpha, \beta) )$$

with

$$v (\alpha, \beta) = (\cos (\alpha) \cos (\beta), \sin (\alpha) (\cos (\beta), \sin (\beta) ),$$

wherein $\alpha$, $\beta$, (and r=1) indicate the spherical coordinates of the rotation vectors $v = v (\alpha, \beta)$;

- Determination of movement optimum pairs $(v_i, \varphi_i)$ by

a) Adaptation of prefixes of $q_i$, so that

$$q_i^T q_{i+1} \geq 0 \text{ for all } i = 1, ..., n-1;$$

b) For all i's =1, ..., n, determination of a possible pair $(v_i, \varphi_i)$ with

$$q_i = (\cos (1/2\varphi_i), \sin (1/2\varphi_i) \ v_i);$$

c) Selection of any start pair $(v_{iStart}, \varphi_{iStart})$, with $iStart \in I := \{i = 1, ..., n \mid q_i \neq (\pm1, 0, 0, 0)\}$;
d) for all j's $\in \{1, ..., n\}$ with the exception of j = iStart, exact determination of a pair $(v_j, \varphi_j)$ from a reference pair $(v_i, \varphi_i)$ according to steps e) to g), wherein $i \in \{1, ..., n\}$ is an adjacent index, i.e. i=j+1 or i=j-1, and, furthermore, either i = iStart, or the reference pair has already been adapted according to steps e) to g));
e) determination of $k^*, h^* \in Z$, so that

$$|\varphi_{j,1}(k^*) - \varphi_i| = \min\{|\varphi_{j,1}(k) - \varphi_i|, k \in Z\}$$

$$= \min\{|\varphi_j + 4k\pi - \varphi_i|, k \in Z\},$$

$$|\varphi_{j,2}(h^*) - \varphi_i| = \min\{|\varphi_{j,2}(h) - \varphi_i|, h \in Z\},$$

$$= \min\{|-\varphi_j + 4h\pi - \varphi_i|, h \in Z\};$$

f) then for $j \in I$, determination of

$$d_{j,1} = |\text{arcos}(v_i^T v_j)| + |\varphi_{j,1}(k^*) - \varphi_i|,$$

$$d_{j,2} = |\text{arcos}(v_i^T(-v_j))| + |\varphi_{j,2}(h^*) - \varphi_i|$$

or for $j \notin I$

$$d_{j,1} = |\varphi_{j,1}(k^*) - \varphi_i|;$$

$$d_{j,2} = |\varphi_{j,2}(h^*) - \varphi_i|;$$

g) Then selection of $(v_j \, \varphi_j)$, where for $j \in I$

$$(v_j, \varphi_j) = \begin{cases} v_j, \varphi_{j,1}(k^*)), & d_{j,1} \leq d_{j,2} \\ (-v_j, \varphi_{j,2}(h^*)), & d_{j,1} > d_{j,2} \end{cases}$$

or for $j \notin I$

$$(v_j, \varphi_j) = \begin{cases} v_i, \varphi_{j,1}(k^*)), & \text{if } d_{j,1} \leq d_{j,2} \\ (v_i, \varphi_{j,2}(h^*)), & \text{if } d_{j,1} > d_{j,2}; \end{cases}$$

Determination of pairs $(\alpha_i, \beta_i)$ from the $v_i$'s in spherical coordinate representation by:
h) Calculating normal spherical coordinates
$(\alpha_i, \beta_i)$ of the $v_i$'s for all i's $\in I$:

$$V_i = (\cos(\alpha_i) \cos(\beta_i), \sin(\alpha_i) \cos(\beta_i) \sin\beta_i));$$

i) Defining

$$J := \{j \in I \text{ with } v_j \neq (0, 0, \pm 1)\}.$$

$$L := \{j \in I \text{ with } v_j = (0, 0, \pm 1)\}$$

and hence definition of expanded spherical coordinates from R x R

- for $i \in J$:

$$(\alpha_{i,1}(h), \beta_{i,1}(k)) = (\alpha_i + 2h\pi, \beta_i + 2k\pi),$$
$$h, k \in Z;$$

$$(\alpha_{1,2}(1), \beta_{i,2}(m)) = (\alpha_i + \pi + 2l\pi, \pi - \beta_i + 2m\pi),$$
$$l, m \in Z;$$

- for $i \in L$:

$$(\alpha_i(x), \beta_i(k)) = (x, \beta_i + 2k\pi),$$
$$x \in R, k \in Z;$$

j) Establishment of any start pair $(\alpha_{jstart}, \beta_{jstart})$ with jstart $\in J$;
k) for all j's $\in I$, with the exception of j - jstart, always determination of expanded polar coordinates according to steps l) and m), wherein $i \in I$ is an adjacent index of j, so that no $k \in I$ lies between i and j, and is, moreover, either i = jstart or the reference pair $(\alpha_i, \beta_j)$ has already been adapted according to steps l) and m));
l) Determination for $j \in J$ of values $h^*, k^*, l^*, m^* \in Z$ with

$$d_{j,l} = \min\{|\alpha_{j,l}(h) - \alpha_i| + |\beta_{j,l}(k) - \beta_i|,$$
$$\text{with } h, k \in Z\}$$
$$= |\alpha_{j,l}(h^*) - \alpha_i| + |\beta_{j,l}(k^*) - \beta_i|;$$

$$d_{j,2} = \min\{|\alpha_{j,2}(1) - \alpha_i| + |\beta_{j,2}(m) - \beta_i|,$$
$$\text{with } l, m \in Z\}$$
$$= |\alpha_{j,2}(l^*) - \alpha_i| + |\beta_{j,2}(m^*) - \beta_i|$$

or for $j \in L$ of a value $k^* \in Z$ with

$$|\beta_j(k^*) - \beta_i| = \min\{|\beta_j(k) - \beta_i|, k \in Z\};$$

m) then selection of $(\alpha_j, \beta_j)$, wherein for $j \in J$

$$(\alpha_j, \beta_j) = \begin{cases} \alpha_{j,1}(h^*), \beta_{j,1}(k^*)) & d_{j,1} \le d_{j,2} \\ \\ (\alpha_{j,2}(l^*), \beta_{j,2}(m^*)) & d_{j,1} > d_{j,2} \end{cases}$$

or for $j \in L$

$$(\alpha_j, \beta_j) = (\alpha_i, \beta_j(k^*));$$

n) Selection of a number of triples determined according to steps a) to m)

$$(\alpha_i, \beta_i, \varphi_i) = \begin{cases} \alpha_i, \beta_i, \varphi_i & \text{for } i \in J \\ (*, \beta_i, \varphi_i) & \text{for } i \in L \\ (*, *, \varphi_i) & \text{for } i \notin l, \end{cases}$$

Wherein all the components denoted by "*" are freely selectable;
o) Adaptation of the selectable components in the triples $(\alpha_i, \beta_i, \varphi_i)$;

- Interpolation of the triples $(\alpha_i, \beta_i, \varphi_i)$ selected in step n) by means of a spline; and
- Insertion of the interpolation function in $q(\alpha, \beta, \varphi)$.

**10.** The device according to Claim 9, **characterised in that** the interpolation device is designed for adapting the freely selectable components of $(\alpha_i, \beta_i, \varphi_i)$ using:

$$iMin: = \min\{i \in l\}$$

$$iMax: = \max\{i \in l\}$$

$$jMin: = \min\{j \in J\}$$

$$jMax: = \max\{j \in J),$$

so that

$$\alpha_p = \begin{cases} \alpha_{jMin} & \text{for } 1 \le p \lneq jMin, \\ \alpha_{jMax} & \text{for } jMax < p \le n \end{cases}$$

and

$$\beta_p = \begin{cases} \beta_{iMin} & \text{for } l \le p \lneq iMin, \\ \beta_{iMax} & \text{for } iMax < p \le n. \end{cases}$$

**11.** The device according to Claim 10, **characterised in that** the interpolation device is designed for adjacent i's, $j \in I$ is selected for all i's < p's < j's, i.e. $p \notin J$

$$\alpha_p = \alpha_i + (p - i) / (j - i) \cdot (\alpha_j - \alpha_i)$$

and correspondingly for adjacent i's, $j \in I$ is selected for all i's < p's < j's, i.e. $p \notin I$

$$\beta_p = \beta_i + (p - i) / (j - i) \cdot (\beta_j - \beta_i).$$

**12.** A device for the orientation guidance of a handling device, such as an industrial robot, wherein given point sequences of poses are interpolated by splines and the orientation is represented by Euler angles $A_i, B_i, C_i \in R$ for i=1, ..., n expanded into the total sum of the real numbers $R^3$.

**13.** The device according to Claim 12, **characterised in that** the interpolation device is designed for the sequential performance of the following steps:

- Representation of the orientations ($A_i, B_i, C_i$) by:

a) determining normal Euler angles ($A_i, B_i, C_i$);
b) for I:= {i=1, ..., n | $B_i \ne \pm\pi/2 + 2k\pi, k \in Z$}
and $i \in I$ definition of

$$(A_{i,1} (g), B_{i,1} (h), C_{i,1} (k))$$

$$= (A_i + 2g\pi, B_i + 2h\pi, C_i + 2k\pi),$$

$$g, h, k \in Z; \text{ and}$$

$$(A_{i,2} (l), B_{i,2} (m), C_{i,2} (o))$$

$$= (A_i + \pi + 2l\pi, \pi - B_i + 2m\pi, C_i + \pi + 2 o\pi),$$

$$l, m, o \in Z;$$

c) for $J := \{i=1, ..., n | B_i = \pi/2 + 2k\pi, k \in Z\}$
and $i \in J$ definition of

$$(A_i (t), B_i (h), C_i (k, t))$$

$$= A_i + t, B_i + 2h\pi, C_i + t + 2k\pi),$$

$$t \in R, h, k \in Z;$$

d) for $L := \{i=1, ..., n | B_i = -\pi/2 + 2k\pi, k \in Z\}$
and $i \in L$ definition of

$$(A_i (t), B_i (h), C_i (k, t))$$

$$= (A_i + t, B_i + 2h\pi, C_i - t + 2k\pi),$$

$$t \in R, h, k \in Z;$$

e) Selection of any start pair $(A_{iStart}, B_{iStart}, C_{iStart})$ with iStart $\in$ I;
f) for all j's $\in \{1, ..., n\}$ apart from j = iStart), determination of expanded Euler angles $(A_j, B_j, C_j)$ according to steps g) and h), wherein $i \in (l, ..., n)$ is an adjacent index, i.e. i = j+1 or i=j-1, and either i = also iStart, or a reference pair $(A_i, B_i, C_i)$ has already been adapted according to steps g) and h);
g) for j $\in$ I, determination of

$$d_{j,1} = \min \{ | A_{j,1} (g) - A_i | + | B_{j,1} (h) - B_i | +$$

$$| C_{j,1} (k) - C_i|, g, h, k \in Z\};$$

$$d_{j,2} = \min \{|A_{j,2} (l) - A_i | + | B_{j,2} (m) - B_i | +$$

$$| C_{j,2} (o) - C_i|, l, m, o \in Z\},$$

wherein the minimum for g*, h*, k* and l*, m*, o* is assumed; and selection of

$$(A_j, B_j, C_j) = \begin{cases} (A_{j,1}(g^*), B_{j,1}(h^*), C_{j,1}(k^*)\,), & \text{if } d_{j,1} \le d_{j,2} \\[2em] (A_{j,2}(l^*), B_{j,2}(m^*), C_{j,2}(o^*)\,), & \text{if } d_{j,1} > d_{j,2} \end{cases}$$

h) for $j \in J$ or $j \in L$, definition of

$$dA_j(t) := |A_j(t) - A_i|$$

$$dB_j(h) := |B_j(h) - B_i|$$

$$dC_j(k, t) := |C_j(k, t) - C_i|$$

with $h, k \in Z$ and $t \in R$;
determination of $h^* \in Z$ with

$$dB_j(h^*) = \min\{dB_j(h), h \in Z\};$$

Calculation of the zeroes of $dA_j(t)$ or $dC_j(k, t)$ or t, wherein $ta_{0,j}$ is the zero of $dA_j(t)$ and $tc_{0,j}(k)$ is the zero of $dC_j(k, t)$;
choice of $k^* \in Z$, so that the distance between the zeroes is minimal, i.e.

$$|ta_{0,j} - tc_{0,j}(k^*)| = \min\{|ta_{0,j} - tc_{0,j}(k)'|,$$

$$k \in Z\};$$

choice of $t^*$ arbitrary between $ta_{0,j}$ and $tC_{0,j}(k^*)$;
and
selection of

$$(A_j, B_j, C_j) = (A_j(t^*), B_j(h^*), C_j(k^*, t^*)\,);$$

- Interpolation of the triples ($A_i$, $B_i$, $C_i$ by a spline and insertion of the interpolation function in the rotation matrix $R(A, B, C)$.

14. The device according to Claim 13, **characterised in that** t* =1/2 (ta$_{0,j}$ + tc$_{0,j}$ (k*)) is selected.

15. The device according to one of Claims 9 to 14, **characterised in that** interpolation device is designed for the separate parameterisation of positions and orientations of the handling device.

16. The device according to one of Claims 9 to 15, **characterised in that** the interpolation device is designed for the separate parameterisation of movements of additional axes on the one hand, and of positions and/or orientations of the handling device on the other.

## Revendications

1. Procédé pour le guidage de l'orientation d'un manipulateur, tel un robot industriel, des suites données de points de poses étant interpolées par des splines, et l'orientation étant représentée par des quaternions sur la boule quadri-dimensionnelle conformément à

$$q(\alpha,\beta,\varphi) = (\cos (\varphi/2), \sin (\varphi/2 \cdot v (\alpha,\beta)) \qquad (1.1)$$

$$v(\alpha,\beta) = (\cos (\alpha) \cos (\beta), \sin (\alpha) \cos (\beta), \sin (\beta)) \qquad (1.2)$$

où $\alpha$, $\beta$ indiquent les coordonnées sphériques des vecteurs tournants v=v $(\alpha,\beta)$ ;
ledit procédé **caractérisé par** les étapes successives consistant à Déterminer des couples optimaux pour le mouvement $(v_i, \varphi_i)$ en

a) adaptant le signe de $q_i$ de manière à avoir

$$q_i{}^T q_{i+1} \geq 0 \text{ pour tous les } i = 1,...,n-1;$$

b) détermination pour tous les i = 1, ...,n, d'un couple possible $(v_i, \varphi_i)$ avec

$$q_i = (\cos (1/2 \ \varphi_i), \sin (1/2 \ \varphi_i) \ v_i ) ;$$

c) sélection d'un couple de départ quelconque $(v_{iStart}, \varphi_{iStart})$, avec iStart $\in$ I;= {i = 1, ..., n | $q_i \neq (\pm 1, 0, 0, 0)$};
d) détermination exacte pour tous les j $\in$ {1,...,n}, excepté j = iStart, d'un couple $(v_j, \varphi_j)$ à partir d'un couple de référence $(v_i, \varphi_i)$ conformément aux étapes e) à g), i $\in$ (1 ,...,n) étant un index adjacent, c'est-à-dire i=j+1 ou i=j-1, et par ailleurs soit i = iStart soit le couple de référence a déjà été adapté suivant les étapes e) à g) ;
e) détermination de k*, h* $\in$ Z, de manière que

$$|\varphi_{j,1} (k^*) - \varphi_i | = \min \{ | \varphi_{j,l} (k) - \varphi_i |, k \in z \}$$
$$= \min \{ | \varphi_j + 4 k\pi - \varphi_i |, k \in Z\},$$

$$|\varphi_{j,2} (h^*) - \varphi_i | = \min \{|\varphi_{j,2}(h) - \varphi_i |, h \in Z\}$$
$$= \min \{| = \varphi_j + 4h\pi - \varphi_i |, h \in Z\};$$

f) puis pour j $\in$ I, détermination de

$$d_{j,1} = |arcos(v_i^T v_j)| + |\varphi_{j,1}(k^*) - \varphi_i|,$$

$$d_{j,2} = |arcos(v_i^T(-v_j))| + |\varphi_{j',2}(h^*) - \varphi_i|$$

et pour $j \notin I$

$$d_{j,1} = |\varphi_{j,1}(k^*) - \varphi_i|,$$

$$d_{j,2} = |\varphi_{j,2}(h^*) - \varphi_i|;$$

g) Ensuite sélection de $(v_j, \varphi_j)$, sachant que pour $j \in I$

$$(v_j, \varphi_j) - \begin{cases} v_j, \varphi_{j,1}(k^*)), & d_{j,1} \leq d_{j,2} \\ (-v_j, \varphi_{j,2}(h^*)), & d_{j,1} > d_{j,2} \end{cases}$$

ou pour $j \notin I$

$$(v_j, \varphi_j) - \begin{cases} v_i, \varphi_{j,1}(k^*)), & \text{si } d_{j,1} \leq d_{j,2} \\ (-v_{ij}, \varphi_{j,2}(h^*)), & \text{si } d_{j,1} > d_{j,2}; \end{cases}$$

- Déterminer les couples $(\alpha_1, \beta_1)$ à partir de $v_i$ dans la représentation des coordonnées sphériques en :

h) calculant les coordonnées sphériques ordinaires $(\alpha_1, \beta_1)$ de $v_i$ pour tous les $i \in I$

$$V_i = (\cos(\alpha_i)\cos(\beta_i), \sin(\alpha_i)\cos(\beta_i)\sin\beta_i)); \qquad (1.3)$$

i) définissant

$$J := \{j \in I \text{ avec } v_j \neq (0, 0, \pm 1)\}, \qquad (1.4)$$

$$L := \{j \in I \text{ avec } v_j = (0, 0, \pm 1)\}, \qquad (1.5)$$

Et définissant ainsi les coordonnées sphériques étendues à partir de R x R
pour $i \in J$ ;

$$(\alpha_{i,1}(h), \beta_{i,1}(k)) = (\alpha_i + 2h\pi, \beta_i + 2k\pi),$$

$$h, k \in Z; \qquad (1.6)$$

$$(\alpha_{i,2}(l), \beta_{i,2}(m)) = (\alpha_i + \pi + 2l\pi, \pi - \beta_i + 2m\pi),$$

$$l, m \in Z; \qquad (1.7)$$

- pour $i \in L$ :

$$(\alpha_i(x), \beta_i(k)) = (x, \beta_i + 2k\pi), \qquad (1.8)$$

$$x \in R, k \in Z;$$

j) définition d'un couple de départ quelconque $(\alpha_{jStart}, \beta_{jStart})$ avec jStart $\in$ J;
k) pour chacun des $j \in I$, excepté $j = jStart$, détermination des coordonnées polaires étendues suivant les étapes l) et m), $i \in I$ étant un index adjacent de j, de sorte qu'aucun $k \in I$ n'est situé entre i et j et en outre soit $i = j$ Start soit le couple de référence $(\alpha_i, \beta_i)$ a déjà été adapté suivant les étapes l) et m) ;
l) déterminant pour $j \in J$ des valeurs $h^*, k^*, l^*, m^* \in Z$ avec

$$d_{j,1} = \min \{ | \alpha_{j,1}(h) - \alpha_i | + | \beta_{j,1}(k) - \beta_i |,$$

$$\text{avec } h, k \in Z\}$$

$$= | \alpha_{j,1}(h^*) - \alpha_i | + | \beta_{j,1}(k^*) - \beta_i |;$$

$$d_{j,2} = \min \{ | \alpha_{j,2}(l) - \alpha_i | + \beta_{j,2}(m) - \beta_i |,$$

$$\text{avec } l, m \in Z\}$$

$$= | \alpha_{j,2}(l^*) - \alpha_i | + | \beta_{j,2}(m^*) - \beta_i |$$

ou pour $j \in L$ d'une valeur $k^* \in Z$ avec

$$|\beta_j(k^*) - \beta_i| = \min \{ | \beta_j(k) - \beta_i, |k \in Z\};$$

m) sélectionnant ensuite parmi $(\alpha_j, \beta_j)$, sachant que pour $j \in J$

$$(\alpha_j, \beta_j) = \begin{cases} \alpha_{j,1}(h^*), \beta_{j,1}(k^*)) & d_{j,1} \leq d_{j,2} \\ (\alpha_{j,2}(l^*), \beta_{j,2}(m^*)) & d_{j,1} > d_{j,2} \end{cases}$$

ou pour $j \in L$

$$(\alpha_j, \beta_j) = (\alpha_i, \beta_j (k^*) );$$

n) sélection d'un certain nombre de triplets définis selon les étapes a) à m)

$$(\alpha_i, \beta_i, \varphi_i) = \begin{cases} \alpha_i, \beta_i, \varphi_i \text{ pour } i \in J \\ (*, \beta_i, \varphi_i) \text{ pour } i \in L \\ (*, *, \varphi_i) \text{ pour } i \notin I, \end{cases}$$

où tous les composants désignés par « * » peuvent être sélectionnés au choix ;

o) adaptant les composants sélectionnables dans les triplets $(\alpha_i, \beta_i, \varphi_i)$;

- Interpoler les triplets $(\alpha_i, \beta_i, \varphi_i)$ sélectionnés à l'étape n) par une spline; et
- Insérer la fonction d'interpolation dans q $(\alpha, \beta, \varphi)$.

2. Procédé selon la revendication 1, **caractérisé par** l'adaptation des composants librement sélectionnables de $(\alpha_i, \beta_i, \varphi_i)$ en utilisant :

$$iMin: = \min \{i \in I\}$$

$$iMax: = \max \{i \in I\}$$

$$jMin: = \min \{j \in J\}$$

$$jMax: = \max \{j \in J\},$$

de sorte que

$$\alpha_p = \begin{cases} \alpha_{jMin} & \text{pour } 1 \leq p < jMin, \\ a_{jMax} & \text{pour } jMax < p \leq n \end{cases}$$

et

$$\beta_p = \begin{cases} \beta_{iMin} & \text{pour } I \leq p < jMin, \\ \beta_{iMax} & \text{pour } jMax < p \leq n. \end{cases}$$

3. Procédé selon la revendication 2, **caractérisé en ce qu'**en outre est sélectionné, pour les i adjacents, $j \in J$ pour tous les
i < p < j, c'est-à-dire p $\notin$ J

$$\alpha_p = \alpha_i + (p - i) / (j - i) \cdot (\alpha_j - \alpha_i)$$

et par conséquent pour les i adjacents, $j \in I$ est sélectionné pour tous les $i < p < j$, c'est-à-dire $p \notin I$

$$\beta_p = \beta_i + (p - i) / (j - i) \cdot (\beta_j - \beta_i).$$

4. Procédé pour le guidage de l'orientation d'un manipulateur, tel un robot industriel, des suites données de points de poses étant interpolées par des splines et l'orientation étant représentée par des angles d'Euler $A_i, B_i, C_i \in R$ pour i =1, ...,n étendus dans l'ensemble total des chiffres réels $R^3$.

5. Procédé selon la revendication 4, **caractérisé en ce que**, pour un changement minimal d'orientation, les étapes suivantes sont exécutées à tour de rôle, les angles d'Euler A, B, C indiquant sans restriction de généralité la rotation autour des axes instantanés respectifs z, y ou x :

- Représenter les orientations $(A_i, B_i C_i)$ en :

a) déterminant les angles d'Euler ordinaires $(A_i, B_i, C_i)$ ;
b) pour $I := \{i=1, ..., n \mid B_i \neq \pm\pi/2 + 2k\pi, k \in Z\}$
et $i \in I$, définition de

$$(A_{I,1} (g), B_{i,1} (h), C_{i,1} (k))$$

$$= (A_I + 2g\pi, B_i + 2h\pi, C_i + 2k\pi),$$

$$g, h, k \in Z; \text{ et}$$

$$(A_{i,2} (l), B_{i,2} (m), C_{i,2} (o) )$$

$$= (A_I + \pi + 2l\pi, \pi - B_i + 2m\pi, C_i + \pi + 2 o\pi),$$

$$l, m, o \in Z;$$

c) pour $J := \{i=1, ..., n \mid B_i = \pi/2 + 2k\pi, k \in Z\}$
et $i \in J$, définition de

$$(A_i (t), B_i (h), C_i (k, t ) )$$

$$= A_i + t, B_i + 2h\pi, C_i + t + 2k\pi),$$

$$t \in R, h, k \in Z;$$

d) pour $L := \{i=1, ..., n \mid B_i = -\pi/2 + 2k\pi, k \in Z\}$
et $i \in L$, définition de

$$(A_i(t), B_i(h), C_i(k, t))$$

$$= (A_i + t, B_i + 2h\pi, C_i - t + 2k\pi),$$

$$t \in R, h, k \in Z;$$

e) sélection d'un couple de départ quelconque $(A_{iStart}, B_{iStart}, C_{iStart})$ avec $iStart \in I$;

f) pour tous les $j \in \{1, ..., n\}$ excepté $j = iStart$), détermination des angles d'Euler étendus $(A_j, B_j, C_j)$ suivant les étapes g) et h)), où $i \in \{1, ..., n\}$ est un index adjacent, c'est-à-dire $i=j+1$ ou $i=j-1$ et en plus, soit $i = iStart$, soit un couple de référence $(A_i, B_i, C_i)$ a déjà été adapté suivant les étapes g) et h);

g) pour $j \in I$, détermination de

$$d_{j,1} = \min \{ |A_{j,1}(g) - A_i| + |B_{j,1}(h) - B_i| +$$

$$|C_{j,1}(k) - C_i|, g, h, k \in Z\};$$

$$d_{j,2} = \min \{|A_{j,2}(l) - A_i| + |B_{j,2}(m) - B_i| +$$

$$|C_{j,2}(o) - C_i|, l, m, o \in Z\},$$

le minimum étant supposé pour $g^*, h^*, k^*$ ou $l^*, m^*, o^*$ ; et sélection de

$$(A_j, B_j, C_j) = \begin{cases} (A_{j,1}(g^*), B_{j,1}(h^*), C_{j,1}(k^*)), \\ \\ \text{si } d_{j,1} \leq d_{j,2} \\ \\ (A_{j,2}(l^*), B_{j,2}(m^*), C_{j,2}(o^*)), \\ \\ \text{si } d_{j,1} > d_{j,2} \end{cases}$$

h) pour $j \in J$ ou $j \in L$, définition de

$$dA_j(t) := |A_j(t) - A_i|$$

$$dB_j(h) := |B_j(h) - B_i|$$

$$dC_j(k, t) := |C_j(k, t) - C_i|$$

avec h, k $\in$ Z et t $\in$ R;
détermination de h* $\in$ Z avec

$$dB_j(h^*) = \min\{dB_j(h), h \in Z\};$$

Calcul des zéros de $dA_j(t)$ ou de $dC_j(k, t)$ par rapport à t, $ta_{0,j}$ étant le zéro de $dA_j(t)$ et $tc_{0,j}(k)$ le zéro de $dC_j(k,t)$ ;
Choix de k* $\in$ Z, de manière à ce que l'écart des zéros devienne minime, soit

$$|ta_{0,j} - tc_{0,j}(k^*)| = \min\{|ta_{0,j} - tc_{0,j}(k)|,$$

$$k \in Z\};$$

Choix de t* arbitraire entre $ta_{0,j}$ et $tC_{0,j}(k^*)$ ;
et

- sélection de

$$(A_j, B_j, C_j) = (A_j(t^*), B_j(h^*), C_j(k^*, t^*));$$

- Interpolation des triplets $(A_i, B_i, C_i)$ par une spline et insertion de la fonction d'interpolation dans la matrice de rotation R (A, B, C).

6. Procédé selon la revendication 5, **caractérisé en ce que** t* = 1/2 ($ta_{0,j}$ + $tc_{0,j}(k^*)$) est choisie.

7. Procédé selon une des revendications 1 à 6, **caractérisé en ce que** les positions du manipulateur sont paramétrées séparément de leur orientation.

8. Procédé selon une des revendications 1 à 7, **caractérisé en ce que** les mouvements des axes supplémentaires sont paramétrés séparément des positions et/ou orientations du manipulateur.

9. Dispositif pour le guidage de l'orientation d'un manipulateur, tel un robot, avec un dispositif d'interpolation pour interpoler une suite donnée de points de poses par des splines, le dispositif d'interpolation étant mis au point pour représenter l'orientation par des quaternions sur la boule quadridimensionnelle conformément à
q($\alpha$, $\beta$, $\varphi$) = (cos ($\varphi$/2), sine ($\varphi$/2) v ($\alpha$, $\beta$) et pour exécuter les étapes suivantes :

- Représentation de chaque quaternion sur la boule quadridimensionnelle conformément à

$$q(\alpha, \beta, \varphi) = (\cos(1/2\,\varphi), \sin(1/2\,\varphi) \cdot v(\alpha, \beta))$$

avec

$$v(\alpha, \beta) = (\cos(\alpha)\cos(\beta), \sin(\alpha)(\cos(\beta), \sin(\beta)),$$

où $\alpha, \beta$, (et r=1) indiquent les coordonnées sphériques des vecteurs tournants v = v($\alpha, \beta$) ;

- Déterminer des couples optimaux pour le mouvement ($v_i$, $\varphi_i$,) en

a) adaptant le signe de $q_i$ de manière à avoir

$$q_i^T q_{i+1} \geq 0 \text{ pour tous les } i = 1, ..., n\text{-}1;$$

b) pour tous les i = 1, ...,n, détermination d'un couple possible ($v_i$, $\varphi_i$,) avec

$$q_i = (\cos (1/2\varphi_i), \text{ sine } (1/2\varphi_i) \ v_i);$$

c) sélection d'un couple de départ quelconque ($v_{iStart}$, $\varphi_{iStart}$) avec iStart $\in$ I := {i = 1, ..., n | $q_i \neq$ ($\pm 1$, 0, 0, 0)};
d) pour tous les j $\in$ {1,...,n} excepté j = iStart, détermination exacte d'un couple ($V_j$, $\varphi_j$) à partir d'un couple de référence ($v_i$, $\varphi_i$) conformément aux étapes e) à g), sachant que i $\in$ {1,...,n} est un index adjacent, c'est-à-dire i=j+1 ou i=j -1 et qu'en outre, soit i = iStart soit le couple de référence a déjà été adapté suivant les étapes e) à g) ;
e) détermination de k*, h* $\in$ Z, de manière que

$$|\varphi_{j,1} (k^*) - \varphi_i | = \min \{|\varphi_{j,l} (k) - \varphi_i |, k \in Z\}$$

$$= \min \{|\varphi_j + 4k\pi - \varphi_i |, k \in Z\},$$

$$|\varphi_{j,2} (h^*) - \varphi_i | = \min \{ |\varphi_{j,2} (h) - \varphi_i |, h \in Z\},$$

$$= \min \{| - \varphi_j + 4h\pi - \varphi_i |, h \in Z\};$$

f) puis pour j $\in$ I, détermination de

$$d_{j,1} = |\text{arcos } (v_i^T v_j) | + | \varphi_{j,1} (k^*) - \varphi_i|,$$

$$d_{j,2} = | \text{ arcos } (v_i^T(-v_j)) | + | \varphi_{j,2} (h^*) - \varphi_i |$$

ou pour j $\notin$ I

$$d_{j,1} = | \varphi_{j,1} (k^*) - \varphi_i | ;$$

$$d_{j,2} = | \varphi_{j,2} (h^*) - \varphi_i | ;$$

g) ensuite sélection de ($v_j$ , $\varphi_j$) où pour j $\in$ I

$$(v_j, \varphi_j = \begin{cases} v_j, \varphi_{j,1}(k^*)), & d_{j,1} \le d_{j,2} \\ \\ (-v_j, \varphi_{j,2}(h^*)), & d_{j,1} > d_{j,2} \end{cases}$$

ou pour $j \notin I$

$$(v_j, \varphi_j = \begin{cases} v_i, \varphi_{j,1}(k^*)), & \text{si } d_{j,1} \le d_{j,2} \\ \\ (v_i, \varphi_{j,2}(h^*)), & \text{si } d_{j,1} > d_{j,2}; \end{cases}$$

- Déterminer les couples $(\alpha_1, \beta_1)$ à partir de $v_i$ dans la représentation des coordonnées sphériques en :

h) calculant les coordonnées sphériques ordinaires $(\alpha_i, \beta_i)$ des $v_i$ pour tous les $i \in I$;

$$V_i = (\cos(\alpha_i) \cos(\beta_i), \sin(\alpha_i) \cos(\beta_i) \sin(\beta_i));$$

i) définissant

$$J := \{ j \in I \text{ avec } v_j \ne (0, 0, \pm 1) \}$$

$$L := \{ j \in I \text{ avec } v_j = (0, 0, \pm 1) \}$$

et définissant ainsi les coordonnées sphériques étendues à partir de R x R

- pour $i \in J$:

$$(\alpha_{i,1}(h), \beta_{i,1}(k)) = (\alpha_i + 2h\pi, \beta_i + 2k\pi),$$
$$h, k \in Z;$$

$$(\alpha_{1,2}(l), \beta_{i,2}(m)) = (\alpha_i + \pi + 2l\pi, \pi - \beta_i + 2m\pi),$$
$$l, m \in Z;$$

- pour $i \in L$ :

$$(\alpha_i(x), \beta_i(k)) = (x, \beta_i + 2k\pi),$$
$$x \in R, k \in Z;$$

j) établissement d'un couple de départ quelconque $(\alpha_{jStart}, \beta_{jStart})$ avec jStart $\in J$ ;
k) pour chacun des $j \in I$, excepté $j = $ jStart, détermination à chaque fois des coordonnées polaires étendues suivant les étapes l) et m), $i \in I$ étant un index adjacent de j, de sorte qu'aucun $k \in I$ n'est situé entre i et j et en outre soit i = j Start soit le couple de référence $(\alpha_i, \beta_i)$ a déjà été adapté suivant les étapes l) et m) ;

l) déterminant pour j $\in$ J des valeurs h*, k*, l*, m* $\in$ Z avec

$$d_{j,l} = \min \{ \, | \, \alpha_{j,l} \, (h) - \alpha_i \, | + | \, \beta_{j,l} \, (k) - \beta_i \, |,$$

$$\text{avec } h, k \in Z \}$$

$$= | \, \alpha_{j,l} \, (h^*) - \alpha_i \, | + | \, \beta_{j,l} \, (k^*) - \beta_i \, |;$$

$$d_{j,2} = \min \{ |\alpha_{j,2} \, (l) - \alpha_i \, | + |\beta_{j,2} \, (m) - \beta_i|,$$

$$\text{avec } l, m \in Z \}$$

$$= |\alpha_{j,2} \, (l^*) - \alpha_i \, | + | \, \beta_{j,2} \, (m^*) - \beta_i \, |$$

ou pour j $\in$ L d'une valeur k*$\in$ Z avec

$$|\beta_j \, (k^*) - \beta_i \, | = \min \{|\beta_j \, (k) - \beta_i|, \, k \in Z\}$$

m) puis sélection de $(\alpha_j, \beta_j)$, où pour j $\in$ J

$$(\alpha_j, \beta_j) = \begin{cases} \alpha_{j,1} \, (h^*), \, \beta_{j,1} \, (k^*) \, ) & d_{j,1} \leq d_{j,2} \\ \\ ( \, \alpha_{j,2} \, (l^*), \, \beta_{j,2}(m^*)) & d_{j,1} > d_{j,2} \end{cases}$$

ou pour j $\in$ L

$$(\alpha_j, \beta_j) = (\alpha_i, \, \beta_j \, (k^*) \, );$$

n) sélectionnant un certain nombre de triplets définis selon les étapes a) à m)

$$(\alpha_i, \beta_i, \varphi) = \begin{cases} \alpha_i, \, \beta_i, \, \varphi_i \text{ pour } i \in J \\ (*, \, \beta_i, \, \varphi_i) \text{ pour } i \in L \\ (*, \, *, \, \varphi_i) \text{ pour } i \notin I, \end{cases}$$

où tous les composants désignés par « * » peuvent être sélectionnés au choix ;

o) adaptation des composants sélectionnables dans les triplets $(\alpha_i, \beta_i, \varphi_i)$ ;

- Interpolation des triplets $(\alpha_i, \beta_i, \varphi_i)$ sélectionnés à l'étape n) par une spline ; et

- Insertion de la fonction d'interpolation dans $q(\alpha, \beta, \varphi)$.

**10.** Dispositif selon la revendication 9, **caractérisé en ce que** le dispositif d'interpolation servant à l'adaptation des composants librement sélectionnables de $(\alpha_i, \beta_i, \varphi_i)$ en utilisant :

$$iMin: = \min \{i \in I\}$$

$$\text{iMax: } = \max \{i \in I\}$$

$$\text{jMin: } = \min \{j \in J\}$$

$$\text{jMax:} = \max \{j \in J\},$$

est mis au point de sorte que

$$\alpha_p = \begin{cases} \alpha_{jMin} & \text{pour } 1 \le p < jMin, \\ \alpha_{jMax} & \text{pour } jMax < p \le n \end{cases}$$

et

$$\beta_p = \begin{cases} \beta_{iMin} & \text{pour } I \le p < iMin, \\ \beta_{iMax} & \text{pour } iMax < p \le n. \end{cases}$$

**11.** Dispositif selon la revendication 10, **caractérisé en ce que** le dispositif d'interpolation est mis au point pour les i adjacents, j ∈ J pour tous les i < p < j, c'est-à-dire p ∉ J pour déterminer

$$\alpha_p = \alpha_i + (p - i) / (j - i) \cdot (\alpha_j - \alpha_i)$$

et par conséquent pour les i adjacents, j ∈ I pour tous les i < p < j, c'est-à-dire p ∉ I pour déterminer

$$\beta_p = \beta_i + (p - i) / (j - i) \cdot (\beta_j - \beta_i).$$

**12.** Dispositif pour le guidage de l'orientation d'un manipulateur, tel un robot industriel, avec un dispositif d'interpolation pour interpoler une suite donnée de points de poses par des splines, le dispositif d'interpolation étant mis au point pour représenter l'orientation par des angles d'Euler $A_i$, $B_i$, $C_i \in R$ pour i=1,..., n , étendus dans l'ensemble total des chiffres réels $R^3$.

**13.** Dispositif selon la revendication 12, **caractérisé en ce que** le dispositif d'interpolation est mis au point pour l'exécution séquentielle des étapes suivantes :

- Représenter les orientations ($A_i$, $B_i$, $C_i$) en :

a) déterminant les angles d'Euler ordinaires ($A_i$, $B_i$, $C_i$) ;
b) pour I:= {i=1, ..., n |$B_i \neq \pm\pi/2 + 2k\pi$, k ∈ Z}
et i ∈ I, définition de

$$(A_{i,1} (g), B_{i,1} (h), C_{i,1} (k))$$

$$= (A_i + 2g\pi, B_i + 2h\pi, C_i + 2k\pi),$$

$$g, h, k \in Z; \text{ et}$$

$$(A_{i,2} (l), B_{i,2} (m), C_{i,2} (o) )$$

$$= (A_i + \pi + 2l\pi, \pi - B_i + 2m\pi, C_i + \pi + 2 o\pi),$$

$$l, m, o \in Z;$$

c) pour $J := \{i=1, ..., n \,|\, B_i = \pi/2 + 2k\pi, k \in Z\}$
et $i \in J$, définition de

$$(A_i (t), B_i (h), C_i (k, t ) )$$

$$= A_i + t, B_i + 2h\pi, C_i + t + 2k\pi),$$

$$t \in R, h, k \in Z;$$

d) pour $L := \{i=1, ..., n \,|\, B_i = -\pi/2 + 2k\pi, k \in Z\}$
et $i \in L$ définition de

$$(A_i (t), B_i (h), C_i (k, t) )$$

$$= (A_i + t, B_i + 2h\pi, C_i - t + 2k\pi),$$

$$t \in R, h, k \in Z;$$

e) sélection d'un couple de départ quelconque $(A_{iStart}, B_{iStart}, C_{iStart})$ avec $iStart \in I$;
f) pour tous les $j \in \{1, ..., n\}$ excepté $j = iStart$), détermination des angles d'Euler étendus $(A_j, B_j, C_j)$ suivant les étapes g) et h), où $i \in (1, ..., n\}$ est un index adjacent, c'est-à-dire $i=j+1$ ou $i=j-1$ et en plus, soit $i = iStart$, soit un couple de référence $(A_i, B_i, C_i)$ a déjà été adapté suivant les étapes g) et h);
g) pour $j \in I$, détermination de

$$d_{j,1} = \min \{ \,|\, A_{j,1} (g) - A_i \,|\, + \,|\, B_{j,1} (h) - B_i \,|\, +$$

$$|\, C_{j,1} (k) - C_i|, g, h, k \in Z\};$$

$$d_{j,2} = \min \{ \, A_{j,2}(l) - A_i \mid + \mid B_{j,2}(m) - B_i \mid +$$

$$\mid C_{j,2}(o) - C_i \mid, l, m, o \in Z\},$$

le minimum étant supposé pour g*, h*, k* ou l*, m*, o* ; et sélection de

$$(A_j, B_j, C_j) = \begin{cases} (A_{j,1}(g^*), B_{j,1}(h^*), C_{j,1}(k^*)\,), \\[2mm] \text{si } d_{j,1} \le d_{j,2} \\[2mm] (A_{j,2}(l^*), B_{j,2}(m^*), C_{j,2}(o^*)\,), \\[2mm] \text{si } d_{j,1} > d_{j,2}; \end{cases}$$

h) pour $j \in J$ ou $j \in L$ , définition de

$$dA_j(t) := |A_j(t)( - A_i |$$

$$dB_j(h) := |B_j(h) - B_i |$$

$$dC_j(k, t) := |C_j(k, t) - C_i |$$

avec $h, k \in Z$ et $t \in R$ ;
détermination de $h^* \in Z$ avec

$$dB_j(h^*) = \min \{dB_j(h), h \in Z\};$$

calcul des zéros de $dA_j(t)$ ou de $dC_j(k, t)$ par rapport à t, $ta_{0,j}$ étant le zéro de $dA_j(t)$ et $tc_{0,j}(k)$ le zéro de $dC_j(k,t)$ ;
choix de $k^* \in Z$, de manière à ce que l'écart des zéros devienne minime, soit

$$\mid ta_{0,j} - tc_{0,j}(k^*) \mid = \min \{|ta_{0,j} - tc_{0,j}(k) \mid ,$$

$$k \in Z\};$$

choix de $t^*$ arbitraire entre $ta_{0,j}$ et $tc_{0,j}(k^*)$ ;
et

sélection de

$$(A_j, B_j, C_j) = (A_j(t^*), B_j(h^*), C_j(k^*, t^*));$$

- Interpolation des triplet $(A_i, B_i, C_i)$ par une spline et insertion de la fonction d'interpolation dans la matrice de rotation R (A, B, C).

**14.** Dispositif selon la revendication 13, **caractérisé en ce que** le dispositif d'interpolation est mis au point pour sélectionner $t^* = 1/2 \ (ta_{0,j} + tC_{0,j} \ (k^*))$.

**15.** Dispositif selon une des revendications 9 à 14, **caractérisé en ce que** le dispositif d'interpolation est formé pour paramétrer séparément les positions et les orientations du manipulateur.

**16.** Dispositif selon une des revendications 9 à 15, **caractérisé en ce que** le dispositif d'interpolation est formé pour paramétrer séparément d'une part les mouvements des axes supplémentaires et d'autre part les positions et/ou les orientations du manipulateur.

**Fig. 1a**

**Fig. 1b**

Fig. 2a

Fig. 2b

**Fig. 3**

**Fig. 4**

Darstellung der Orientierungen mittels Quaternionen $q_1$, $q_2$ ,... $q_n$

Folge der Quaternionen optimal?

**Nein** → Vorzeichen so anpassen, dass $q_i^T q_{i+1} \geq 0$ gilt für alle $i = 1, ..., n-1$ (gewährleistet minimale Umorientierung von einem zum nächsten Quaternion)

**Ja** ↓

Umrechnung aller Quaternionen in ein mögliches Paar aus Drehvektor und –winkel ($v_i$, $\varphi_i$); für $q_i = (\pm 1, 0, 0, 0)$ ist der Drehvektor nur vorläufig und wird zunächst gleich einem „nicht vorläufigen" Nachbardrehvektor gesetzt.

Folge der Paare ($v_i$, $\varphi_i$) optimal?

**Nein** → Wahl eines beliebigen Startpaares ($v_{iStart}$, $\varphi_{iStart}$) mit $q_{iStart} \neq (\pm 1, 0, 0, 0)$; iteratives Ersetzen von i = iStart aus zum Anfang bzw. Ende der Paarfolge; Ersetzen der Paare ($v_j$, $\varphi_j$) mit derjenigen (alternativen) Darstellungsmöglichkeit (selbes Quaternion), die minimale Umorientierung zum bereits optimierten Nachbarpaar (zu Beginn Startpaar) aufweist.

**Ja** ↓

Streichung aller frei wählbaren Drehvektoren (bei $q_i = (\pm 1, 0, 0, 0)$).

Ermittlung von Polarkoordinaten der verbleibenden $v_i$ (Radius 1); für $\beta_i = \pm \pi/2$ ist $\alpha_i$ frei wählbar und kann vorläufig auf ein benachbartes, nicht frei wählbares $\alpha$ gesetzt werden.

Folge der Polarkoordinaten optimal?

**Nein** → Wahl eines beliebigen Startpaars ($\alpha_{jStart}$, $\beta_{jStart}$) mit $\beta_{jStart} \neq \pm \pi/2$; iteratives Ersetzen jedes durchlaufenen Paars ($\alpha_k$, $\beta_k$) der Paarfolge von j = jStart aus zum Anfang bzw. Ende durch geeignete erweiterte Polarkoordinaten, so dass die Umorientierung zum bereits optimierten Nachbarpaar (zu Beginn Startpaar) minimiert wird.

**Ja** ↓

Streichung aller frei wählbaren $\alpha_i$ (mit $\beta_i = \pm \pi/2 + 2k\pi$); Lücken in den Tripeln ($\alpha_i$, $\beta_i$, $\varphi_i$) bleiben offen (oder werden geeignet gefüllt).

Legen eines Splines durch die „Quaternionen-Polarkoordinaten" ($\alpha_i$, $\beta_i$, $\varphi_i$)

# Fig. 5

Darstellung der zu interpolierenden Orientierungen mittels Eulerwinkeltripeln $(A_1, B_1, C_1)$, $(A_2, B_2, C_2)$, ..., $(A_n, B_n, C_n)$

Folge der Eulerwinkel bereits optimal?

Nein

Ja

Wahl eines beliebigen Starttripels
$(A_{iStart}, B_{iStart}, C_{iStart})$ mit $B_{iStart} \neq \pm \pi/2$.

von iStart aus iteratives Ersetzen zum Anfang
bzw. Ende der Winkelfolge jedes durchlaufenen
Tripel $(A_k, B_k, C_k)$ durch geeignete erweiterten
Eulerwinkeln, so dass die Orientierungsänderung zum bereits optimierten Nachbarpaar (zu
Beginn Startpaar) minimiert wird.

Legen eines Splines durch die Folge erweiterter Eulerwinkel $(A_i, B_i, C_i)$

# Fig. 6

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **HORSCH ; JÜTTLER.** *Computer-Aided Design,* 1998, vol. 30, 217-224
- Rational motion design - a survey. **RÖSCHEL, O.** COMPUTER AIDED DESIGN. ELSEVIER PUBLISHERS BV, Marz 1998, 169-178
- Helmuth Späth, Spline-Algorithmen. R. Oldenbourg Verlag, 1986, vol. 4